Europäisches Patentamt

European Patent Office

Office européen des brevets

(19)

(11) Veröffentlichungsnummer : **0 536 113 B1**

(12) **EUROPÄISCHE PATENTSCHRIFT**

(45) Veröffentlichungstag der Patentschrift :
26.04.95 Patentblatt 95/17

(51) Int. Cl.⁶ : **H02P 6/18**

(21) Anmeldenummer : **90909041.7**

(22) Anmeldetag : **31.05.90**

(86) Internationale Anmeldenummer :
**PCT/DE90/00411**

(87) Internationale Veröffentlichungsnummer :
**WO 90/15473 13.12.90 Gazette 90/28**

(54) **MOTOR ODER LAGEMELDER.**

(30) Priorität : **01.06.89 DE 3917924**
**23.12.89 DE 3942755**

(43) Veröffentlichungstag der Anmeldung :
**14.04.93 Patentblatt 93/15**

(45) Bekanntmachung des Hinweises auf die
Patenterteilung :
**26.04.95 Patentblatt 95/17**

(84) Benannte Vertragsstaaten :
**AT DE FR GB IT**

(56) Entgegenhaltungen :
**EP-A- 0 251 785**
**DE-C- 3 013 550**
**US-A- 3 980 933**
**IEE SOUTHEASTCON 1988 CONF. PROCEE-
DINGS, April 1988, US, Seiten 523 - 528;
M.CHOW ET AL: "DETECTION OF A VARIA-
BLE RELUCTANCE MACHINES ROTOR POSI-
TION USING A PREDICTOR CORRECTOR
ESTIMATOR"**

(56) Entgegenhaltungen :
**RADIO AND ELECTRONIC ENGINEER, Band.
54, Nr. 11, 1984, LONDON, GB, Seiten 467 -472;
P. ATKINSON ET AL: "MICROPROCESSOR
CONTROL OF TWO-PHASE A.C. INDUCTION
MOTORS"**

(73) Patentinhaber : **PAPST LICENSING GmbH
Max-Planck-Strasse 14
D-78549 Spaichingen (DE)**

(72) Erfinder : **VON DER HEIDE, Johann
Marktstr. 15
D-7230 Schramberg (DE)**
Erfinder : **MÜLLER, Uwe
Steinbruchstr. 14
D-7821 Eisenbach 3 (DE)**
Erfinder : **HERMANN, Michael
Roderstr. 10
D-7730 Villingen-Schwenningen (DE)**

(74) Vertreter : **Patentanwälte Westphal, Buchner,
Mussgnug Neunert, Göhring
Waldstrasse 33
D-78048 Villingen-Schwenningen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Motor oder einen Lagemelder (Positionssensor) nach dem Oberbegriff des Anspruchs 1. Unter einem Motor wird hier z.B auch ein Linearmotor verstanden, dessen Stellung erfaßt werden soll.

Ein rotierender Motor hat als bewegliches Teil einen Rotor, während bei einem Linearmotor das bewegliche Teil als Läufer bezeichnet wird.

Es sind verschiedene Arten von Positionssensoren bekannt. Diese werden z.B. für die Erfassung der Position von Motorelementen verwendet.

In den meisten Fällen existiert für ein rotatorisch wirkendes Prinzip das zugehörige linear wirkende. Die wichtigsten Klassen solcher Positionsgeber bzw. Lagemelder basieren auf folgenden Vorrichtungen:

Positionssensoren mit direktem Kontakt zum beweglichen Element:

a) Mechanische Kontakte.

Positionssensoren mit berührungslos arbeitenden Mitteln:

a) Optoelektronische Positionssensoren :

Lichtschranken, Differenzphotosensoren, optische Interferenzsensoren

b) Magnetoelektronische (galvanomagnetische) Positionssensoren:

Halleffekt-Sensoren (auf Basis von Hallgeneratoren), Wiegandeffekt-Sensoren, magnetostriktive Sensoren, magnetoresistive Sensoren,

c) Elektromagnetische Positionssensoren:

Resolver, Wirbelstromsensoren, Differentialtransformatoren

d) Elektrische Positionssensoren:

Kapazitiv wirkende Positionssensoren, Mikrowellen-Entfernungsmeßgeräte

Diese Liste zählt nur die wichtigsten Klassen auf und stellt nur eine kleine Auswahl der in der Praxis benutzten Sensoren für rotatorische oder lineare Meßaufgaben dar. Im folgenden sollen die Positionserfassungs-Verfahren erläutert werden, soweit sie innerhalb linearer oder rotatorisch wirkender Elektromotoren verwendet werden.

Im folgenden wird auf die elektrische Winkelposition Bezug genommen. Diese wird in elektrischen Graden gemessen, also z.B. 20 ° el. Bei einem zweipoligen Motor, bei dem die Polpaarzahl p = 1 ist, entsprechen die elektrischen Grade der Rotorstellung den mechanischen Graden. Bei einem Motor mit vier Polen ( p = 2 ) durchläuft der Rotor, wenn er sich um 360 ° mech. dreht, insgesamt p x 360 ° el., also 720 ° el., etc.

Die beschriebenen Meßverfahren nach der Erfindung stimmen jeweils innerhalb eines Bereichs von 360 ° el., d.h. sie bestimmen die elektrische Winkelposition des Rotors.

Z.B. kann bei einem vierpoligen Motor ( p = 2 ) die gemessene elektrische Winkelposition 90 ° el. eine Rotorstellung von 90 ° el. oder von ( 90 + 360) ° el. bedeuten, was aber für die Steuerung der Kommutierung ohne Belang ist.

Neben den Verfahren, die eine Positionserfassung in Motoren durch externe Sensoren durchführen ( beispielsweise mit Halleffekt-Sensoren, mit Lichtschranken, mit magnetoresistiven Sensoren) gibt es Verfahren, die sich die Positionserfassung eines Motors durch motoreigene Komponenten zur Aufgabe gestellt haben. Diese Verfahren können im wesentlichen in zwei Klassen eingeteilt werden.

In einer ersten Klasse werden Generatoreigenschaften von Motorspulen benutzt. Es findet eine Positionserkennung auf dynamische Weise statt. Abhängig von der Höhe oder vom Integral der generierten Spannung über die Zeit kann auf die Position des Rotors geschlossen werden.

Diese Klasse zeichnet sich durch unterschiedliche Anwendungsbereiche und vielfältigsten Ausführungsformen aus. Als Beispiel für den hierauf beziehbaren Stand der Technik kann folgende Patentliteratur genannt werden :

| | |
|---|---|
| US | 4,495,450 |
| EP-B | 0171635 |
| DE-OS | 27 52 880 |
| DE-PS | 30 13 550 |
| EP-A | 0316077 |

Hierbei ist es unerheblich, ob das Magnetfeld des Rotors durch Permanentmagnete oder durch Elektromagnete erzeugt wird. Sofern deshalb hier oder im folgenden von Permanentmagneten die Rede ist, schließt dies immer auch Elektromagneten ein, sofern nichts anderes vermerkt ist.

Desgleichen ist es möglich, umlaufende und stationäre Teile des Elektromotors funktional auszutauschen, d.h. die Erfindung eignet sich in gleicher Weise für Innenläufermotoren, Außenläufermotoren, Motoren mit ebenem Luftspalt, Motoren, bei denen der permanentmagnetische Rotor umläuft und die Wicklung des Motors

EP 0 536 113 B1

stillsteht oder umgekehrt Motoren, bei denen die Wicklung des Motors umläuft und z.B. über Schleifringe versorgt wird und der permanetmagnetische Teil steht und anderen Motorbauarten wie nachfolgend an Beispielen ausführlich erläutert.

In einer zweiten Klasse beruhen die Positionserkennungsverfahren auf der Tatsache, daß die in Frage kommenden Motoren nicht ideal sind, d. h. daß trotz konstanter eingeprägter elektrischer Größen gewöhnlich variable Positions- bzw. Winkelabhängigkeiten der mechanischen Größen feststellbar sind.

In diesem Fall sind also diejenigen physikalischen Effekte von Interesse, die auf der positionsabhängigen Veränderung elektrischer oder elektromagnetischer Parameter des Motors basieren und die durch Überprüfung mit ausschließlich elektrischen Mitteln in Erfahrung gebracht werden können. Eine solche Überprüfung bzw. Messung von interessierenden Parametern kann z. B. dadurch ausgeführt werden, daß eine oder mehrere geeignete Zusatzmeßspulen an einem bzw. an mehreren Orten innerhalb des Motors angebracht werden.

Die Spulen besitzen als Zweipole komplexe Widerstände, die durch ohmsche Widerstände und Induktivitätswerte gekennzeichnet sind. Diese komplexen Widerstände sind gewöhnlich auch frequenzabhängig.

Bei Wahl eines geeigneten Anbringungsplatzes innerhalb des Motors sind eine oder mehrere der genannten Größen abhängig von der jeweils eingenommenen Position des Läufers ( bei einem Linearmotor) oder des Rotors ( bei einem rotierenden Motor ).

So kann z. B. durch genaueste Ermittlung der Induktivität der Meßspulen auf die Position des Läufers oder des Rotors geschlossen werden, zumindest auf die elektrische Winkelposition, wie eingangs erläutert. Nachteilig ist es hierbei, daß statt eines extern angebrachten Sensors ein Sensor in Form von mindestens einer zusätzlichen Meßspule im Inneren des Motors vorhanden sein muß.

Sind mehrere solcher Meßspulen vorhanden, so kann neben dem komplexen Eingangswiderstand und dem komplexen Ausgangswiderstand noch zusätzlich das Koppelverhältnis zweier Spulen als Meßgröße genutzt werden. Es ergeben sich dann mehrere Möglichkeiten, die positionsabhängigen Größen kombiniert zu messen. Darüberhinaus können auch unterschiedliche Frequenzen oder Frequenzgemische verwendet werden.

Ein Verfahren dieser Art wird z.B. in der deutschen Patentschrift 26 16 552 beschrieben. Von Vorteil ist es, daß hierbei die Induktivitäten der Spulen so ausgelegt werden können, daß auch höherfrequente Testsignale ohne Schwierigkeiten verwendet werden können.

Bei einer technisch verbesserten Verfahrensweise wird auf die zusätzliche Anbringung von Meßspulen innerhalb des Motors verzichtet. Statt dessen werden die Induktivitätswerte der motoreigenen Induktivitäten, also der Stränge ( Phasen ) oder Spulen des Motors für den durchzuführenden Meßvorgang mitverwendet.

Da bei der letztgenannten Sensorklasse außer der erforderlichen Sensorelektronik keinerlei zusätzlicher konstruktiver Aufwand erforderlich ist, besitzen alle Mitglieder dieser Klasse den Vorteil potentiell großer Kostenvorteile bei gleichzeitig verbesserter Zuverlässigkeit des Motors.

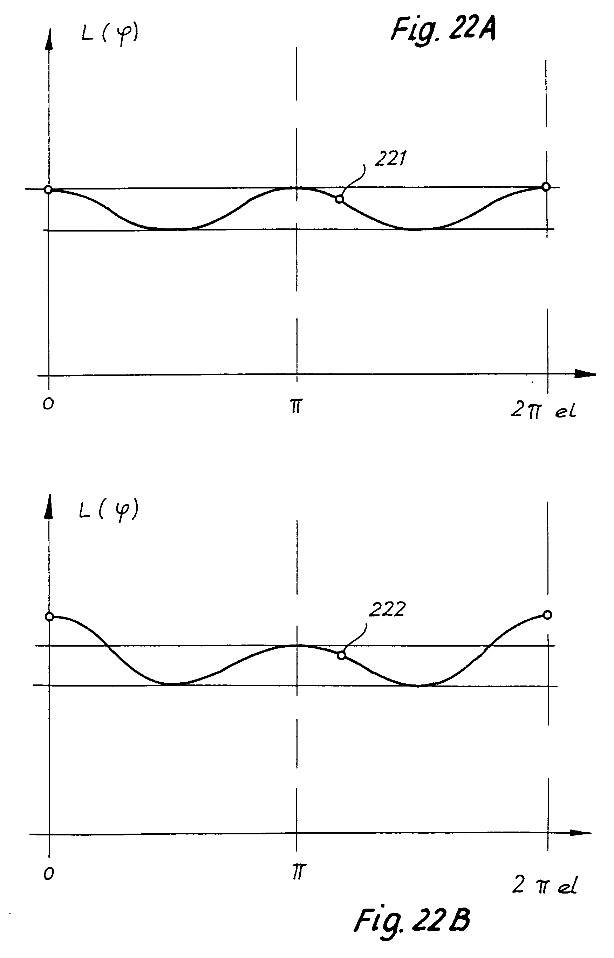

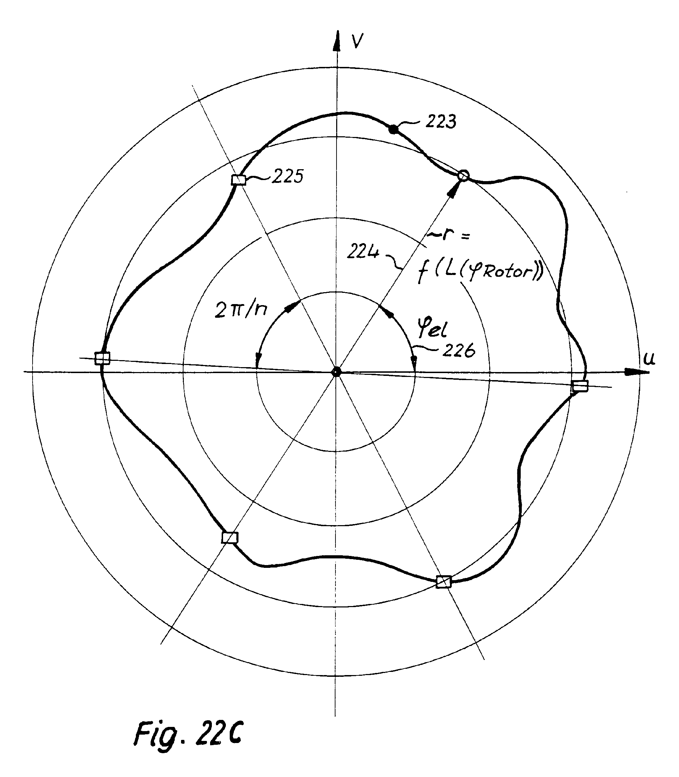

Beispiele für derartige Anordnungen zeigen die EP-A 251785 oder die EP-A 171635. Bei der Anordnung nach der EP-A 251785 sind im wesentlichen lediglich die zusätzlichen Leistungsstufen zur Ansteuerung der Motorstränge erforderlich, sowie einige Spezialbauteile als Elektronik für die Ansteuerung des Motors. Der Schaltung haftet jedoch der Nachteil an, daß ein auszumessender Bereich von 360 ° el. in zwei nicht unterscheidbare Bereiche zu je 180 ° el. aufgespalten wird. Dies beruht darauf, daß symmetrisch zum Winkel von 0 ° el. bzw. 180 ° el. im anschließenden Bereich von 180 ° el. bis 360 ° el. gleich große Funktionswerte vorgefunden werden. Das heißt, man weiß nicht, ob zur errechneten Rotorstellung ein Grundwert von 0 ° el. oder von 180 ° el. hinzuaddiert werden muß (Fig. 22 A ) Darüberhinaus ist hierbei die Genauigkeit der Positionserfassung auf etwa ± 60 ° el. begrenzt.

Eine Anordnung und ein Verfahren zur Umgehung dieses Problems wird in einer Arbeit von Watanabe, Isii und Fuji angegeben ( IECON 87, Seite 228 - 234 ). Deren Lösung beruht darauf, daß je nach Pollage der Permanentmagneten des Rotors eine einzelne Statorspule durch die permanentmagnetische Vormagnetisierung entweder schneller, bei umgekehrter Pollage oder Bestromungsrichtung dann jedoch langsamer bestromt werden wird.

Dies beruht auf der nichtlinearen Magnetisierungskennlinie der beteiligten weichmagnetischen Spulenkerne bzw. des magnetischen Kreises und der daraus folgenden Induktivitätsänderung der jeweils bestromten Spule. Mit dieser Schaltung gelingt eine Positionsbestimmung des Rotors innerhalb eines Bereiches von 360° el. ohne Mehrdeutigkeit.

Allerdings läßt auch hier die Genauigkeit der Positionsbestimmung noch zu wünschen übrig. Die typisch erreichbare Genauigkeit ist auf ± 15 ° el. limitiert. Immerhin reicht diese Genauigkeit aus, um einen geeigneten Motor gezielt in Drehung zu versetzen. Oberhalb einer gewissen Winkelgeschwindigkeit sind dann die in den Spulen induzierten Spannungen so groß, daß diese zur "dynamischen" Bestimmung der Kommutationszeitpunkte herangezogen werden können und eine Beschleunigung auf höhere Winkelgeschwindigkeiten möglich ist.

Dieser drehzahlgesteuerte Wechsel zwischen Positionserkennung auf statische Weise und auf dynamische Weise wird ebenfalls in der genannten EP-A 251785 und der o.g. Schrift von Watanabe, Isii und Fuji beschrieben.

Weitere Verfahren: Durch positionsabhängige Variation der Spuleninduktivitäten kann unter geeigneten Voraussetzungen auch das transformatorische Koppelverhältnis zwischen zwei Spulen zur Positionsbestimmung des Rotors herangezogen werden.

Neben der Analyse des Amplitudenverhaltens ist auch hier eine Analyse des Zeitverhaltens durchführbar. Das letztgenannte Verfahren wird in der JP-PS 60-207489 sowie bei Ishii und Watanabe, Mem. Fac. Eng., Osaka City University, Volume 26, Seiten 57 - 65 (1985) erwähnt.

Alle genannten Verfahren erfordern zu ihrer Ausführung gewöhnlich den Einsatz umfangreicher elektronischer Hilfsmittel.

Verfahren dieser Art werden insbesondere gern in kollektorlosen Gleichstrom-Elektromotoren verwendet. Diese besitzen aufgrund ihres einfachen Aufbaus und der daraus resultierenden Vorteile in Bezug auf Zuverlässigkeit und Wirkungsgrad eine vielfältige Verbreitung und Anwendung.

Wesentliche Komponenten solcher kollektorlosen Motoren sind:

Magnete, Spulen ( mit oder ohne Eisenkern), Positionssensoren, Steuer- und Leistungselektronik. Im Normalfall werden zur Ansteuerung dieser Motoren galvanomagnetisch wirkende Positionssensoren verwendet, z.B. Hallgeneratoren, wobei als steuernde Magnete für diese Positionssensoren auch die Arbeitsmagnete des Motors, also dessen Rotormagnete, herangezogen werden können. In diesem Falle ist die Zuverlässigkeit solcher Anordnung jedoch begrenzt durch die Zuverlässigkeit der Sensorbausteine, deren Zuleitung sowie durch die Betriebstemperatur von Sensoren und Steuermagneten.

Zur Verbesserung der Zuverlässigkeit solcher Vorrichtungen ist es daher von Vorteil, auf externe Positionssensoren ganz zu verzichten. Um eine Positionsbestimmung mit motoreigenen Komponenten durchzuführen, ist es daher erforderlich, die Motorspulen - parallel zu ihrer Funktion zum Antrieb des Motors - als systemeigene Sensorelemente mitzuverwenden. Hierbei ist ein gleichzeitig erzielter Vorteil darin zu sehen, daß durch Fortfall der externen Sensorelemente , z.B. der Hallgeneratoren, Bauvolumen eingespart wird und man zu kleineren Bauformen gelangt. Für die Betriebsweise des Motors ohne externe Positionssensoren wird der Motor zweckmäßig wechselweise in den Zustand eines Sensors, sodann in den Zustand eines Motors (Aktuators), dann wieder in den Zustand eines Sensors, etc., gebracht.

Als relativ schwierig stellt sich jedoch die Positionserkennung bei Stillstand des Motors heraus. Die Schwierigkeiten liegen insbesondere darin, innerhalb kürzester Meßzeit und Signalverarbeitungszeit aus einem Minimum an Meßinformation genügend genaue Positionsinformation zu generieren. In einem einfachen Falle genügt es , mit einer reduzierten Genauigkeit nur Kommutierungszeitpunkte festzulegen, für die ein Wechsel der Bestromungsverhältnisse des Motors erforderlich wird. Je nach Anforderungen an den Motorbetrieb genügt eventuell eine Positionsbestimmung des Rotors oder Läufers, die auf ca. ± 10 ° el. genau ist. In einem anderen Falle ist es z.B. erforderlich, zu Regelungszwecken für den Motor in sehr kurzer Meßzeit außergewöhnlich genaue Meßwerte zu erhalten, so daß eine gewünschte Drehzahlkorrektur bzw. Lagekontrolle erreicht wird. Diese Aufgabe stellt erhöhte Anforderungen an die Leistung der zugehörigen Elektronik sowie der verwendeten Software. Eine weitere Schwierigkeit bei den bekannten Verfahren liegt darin, gattungstypische Phasenfehler von ± 180 ° el. bei der Positionsbestimmung von Läufer oder Rotor mit Sicherheit auszuschließen. Solche Fehler bedeuten, daß dann, wenn der Rotor um 180 °el., 360 ° el. usw. weitergedreht wird, die typische Positionsinformation jeweils gegenüber der Ursprungsstellung weitgehend unverändert ist.

Eine Aufgabe der Erfindung wird deshalb darin gesehen, genaue und trotzdem preisgünstige und unempfindliche Sensoren für Drehbewegungen oder Linearbewegungen bereitzustellen. Eine weitere Aufgabe der Erfindung wird darin gesehen, durch zuverlässige Kommutierungsverfahren einen sicheren Motorbetrieb zu bewirken. Eine weitere Aufgabe der Erfindung liegt darin, eine gesicherte Anlaufrichtung solcher Motoren zu bewirken.

Nach der Erfindung werden diese Aufgaben gelöst durch die in den Ansprüchen 1 und 37 angegebenen Maßnahmen. Durch die Erfindung wird es auch ermöglicht, den nutzbaren Drehzahlbereich gegenüber dem Stand der Technik zu vergrößern. Nach der Erfindung kann man mit Mitteln der Mikroelektronik und der verwendeten Software bei der Positionsbestimmung eine verbesserte Genauigkeit erzielen und den relativen Fehler beschränken.

Weitere Einzelheiten und vorteilhafte Weiterbildungen der Erfindung ergeben sich aus den im folgenden beschriebenen und in den Zeichnungen dargestellten Ausführungsbeispielen sowie aus den Unteransprüchen.

Es zeigt :

Fig. 1             Grundstruktur der Ansteuerelektronik für einen Motor

Fig. 2             Grundstruktur eines Kommutierungsprozessors,

Fig. 3             zeigt das nichtlineare Verhalten für ferromagnetische Kernmaterialien für Spulen

|  |  |
|---|---|
|  | sowie relative Permeabilitäten bzw. Induktivitäten, |
| Fig. 4 | zeigt den Feldlinienverlauf für einen Gleichstrommotor im Leerlauffall |
| Fig. 5 | zeigt den Feldlinienverlauf für einen Gleichstrommotor im bestromten Zustand |
| Fig. 6 | zeigt den schematischen Aufbau eines Reluktanzmotors mit sechs Spulen sowie einem Rotor mit Vierersymmetrie, |
| Fig. 7 | zeigt einen 3-T-Ankermotor mit drei Spulen und zwei Magnetpolen, |
| Fig. 8 | zeigt einen Stator eines Außenläufermotors mit Statorblechen und Statorsträngen, |
| Fig. 9 | zeigt das Feldlinienbild eines Innenläufermotors mit vier Polen und sechs Statorsträngen |
| Fig. 10 | zeigt den Motor nach Fig. 9 zur Erläuterung des magnetischen Flusses in unterschiedlichen Statorelementen, |
| Fig. 11A | zeigt ein weiteres Flußlinienbild für eine nicht symmetrische Rotorstellung des Motors nach Fig. 9 |
| Fig. 11B | zeigt die Ausführung des Rotors für einen Flachmotor mit unterschiedlicher Ausbildung einzelner Rotorpole, |
| Fig. 11C | zeigt die Ausführung eines Rotors analog den Figuren 8 bis 11A mit unterschiedlicher Magnetisierung einzelner Rotorpole, |
| Fig. 11D | zeigt einen Motoraufbau mit unterschiedlicher Ausführung des Luftspaltes unter einzelnen Statorpolen |
| Fig. 11E | zeigt schematisch verschiedene Varianten zur Erzeugung von Sättigung im Statoreisen, |
| Fig. 12 | zeigt eine Art des Bestromungsablaufs zum Zwecke der Meßwertbeschaffung, |
| Fig. 13 | zeigt die Herleitung eines Mittelwerts aus mehreren Messungen, |
| Fig. 14 | zeigt die lineare Anordnung mehrerer positionsabhängiger Mittelwerte, |
| Fig. 15 | zeigt den Lagevergleich zweier phasenverschobener Kurven, |
| Fig. 16A bis 16 C | zeigt verschiedene Verfahren zur Durchführung des Lagevergleichs zweier phasenverschobener Kurven, |
| Fig. 17A und 17B | zeigen die räumliche Darstellung eines Meßergebnisses bestehend aus drei Einzelmessungen, sowie seine Auswertung, |
| Fig. 18 | zeigt die zweidimensional orientierte Darstellung eines Meßergebnisses mit drei Einzelmessungen, sowie dessen Auswertung |
| Fig. 19A | zeigt ein Schaltschema zur Bestromung von drei Spulen mittels sechs Schaltern |
| Fig. 19B | gibt den resultierenden Stromfluß in den Spulen der Fig. 19A für je zwei geschlossene Schalter an |
| Fig. 19C | zeigt eine einfache Bestromungssequenz und sechs zugehörige Stromverläufe |
| Fig. 19D | zeigt ein Rechenschema zur Ermittlung der Grundwelle einer Funktion, und zwar in grafischer Darstellung und bei sechs Werten ml bis m6 (entsprechend einem Motor mit drei oder mit sechs Strängen L1 bis L6, wie er z.B. in Fig. 9 dargestellt ist), |
| Fig. 20 | zeigt die Darstellung einer Vektorsumme, errechnet nach obiger Rechenvorschrift gemäß Fig.19D |
| Fig. 21 | zeigt ein Flußdiagramm zur Phasen- und Amplitudenbestimmung der ersten Harmonischen einer Funktion, die durch sechs Stützwerte bestimmt ist |
| Fig. 21A | zeigt den approximierten und periodisch fortgesetzten Kurvenverlauf durch sechs Stützwerte m1 bis m6 sowie die Phasenlage der zugehörigen ersten Harmonischen |
| Fig. 22A, 22B und 22C | zeigen die Darstellung für induktivitätsabhängige Werte gegenüber dem elektrischen Winkel, |
| Fig. 23 | zeigt den Verlauf einer Korrekturfunktion für die Zuordnung eines Istwerts zu einem Kennwert der Rotorstellung, |
| Fig. 24 | zeigt ein Flußdiagramm für die Bestromung eines Motors bzw. Positionssensors |
| Fig. 25 | zeigt ein Diagramm, das verschiedene Möglichkeiten für die Steuerung des Anlaufs zeigt, und |
| Fig. 26 | zeigt ein Flußdiagramm, welches den Ablauf der Messung der Rotorstellung alternierend mit der Bestromung bei einem Motor zeigt. |

Der erfindungsgemäße Gedanke zur Lösung der gestellten Aufgabe besteht aus folgenden Teilen :

a) Es wird ein Mikroprozessor eingesetzt. Die zu Meßzwecken erforderliche, neuartige Bestromung wird durch den Mikroprozessor kontrolliert.

b) Die Messung und neuartige Auswertung der Meßwerte wird ebenfalls durch den Mikroprozessor mit zugehörigen Interface-Schaltungen wahrgenommen.

Hierbei ist jedoch zu beachten, daß kostengünstige Mikroprozessoren nur eine geringe Rechengeschwindigkeit besitzen und dem zu lösenden Problem zumeist nicht angemessen sind. Zur Lösung dieses speziellen Problems kann man nach der Erfindung die auszuführenden Steuer- und Meßvorgänge mindestens anteilig durch einen speziell angefertigten Zusatzprozessor abarbeiten lassen.

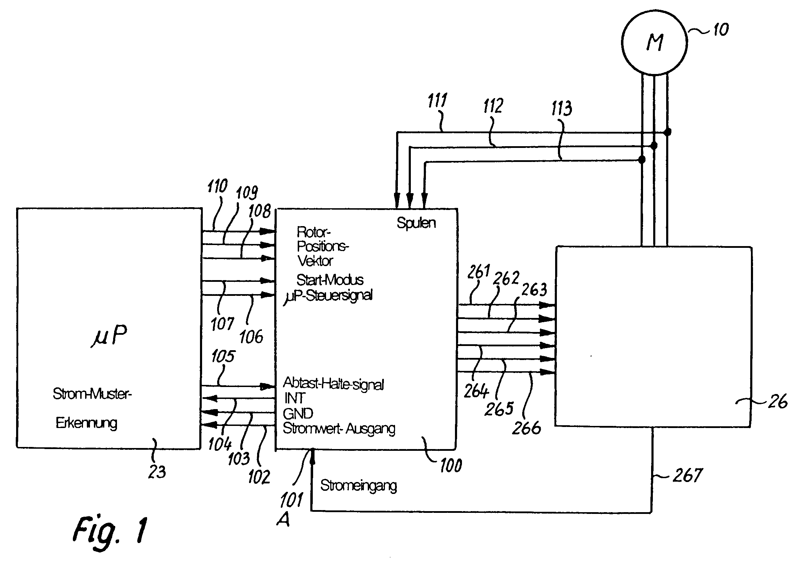

Die Grundstruktur einer solchen erfindungsgemäßen Vorrichtung wird in Fig. 1 gezeigt. Sie besteht neben dem eigentlichen Motor 10 aus einer zugehörigen Bestromungs- und Endstufeneinheit 26, einem Kommutierungsprozessor 100 sowie dem steuernden oder regelnden Mikroprozessor 23. Im folgenden wird anstelle des Begriffs Mikroprozessor auch einfach kurz der Begriff Prozessor verwendet.

Der Motor 10 kann z.B., wie in der Fig. 1 gezeigt, ein dreiphasiger kollektorloser DC-Motor sein. Die Erfindung ist jedoch nicht auf solche Motoren beschränkt sondern kann, wie in späteren Abbildungen gezeigt, auch vorteilhaft mit anderen Motorkonstruktionen verwendet werden. Darüberhinaus ist es Gegenstand der Erfindung, bei Bedarf auf den motorischen Betrieb ganz zu verzichten und den Motor ausschließlich im Sensorbetrieb zur Ermittlung von Positionen einzusetzen.

Bei der Endstufeneinheit 26 handelt es sich im wesentlichen um eine Schalteinheit zum Bestromen der einzelnen Motorphasen.

Sie ist zweckmäßigerweise in herkömmlicher Technologie als eine Anordnung von z.B. drei Transistorhalbbrücken ausgeführt. Solche Schaltungen sind z.B. aus der DE-OS 31 06 856 bekannt. Andere Ausführungsformen, z.B. mit Thyristorelementen oder SCR-Elementen, sind ebenfalls denkbar.

Die Endstufeneinheit 26 besitzt mehrere Steuereingänge ( 261 bis 266 ) zum Betätigen der in ihr enthaltenen, nicht dargestellten , elektronischen Schalter.

Diese Schalter bestromen den Motor 10 über die einzelnen Phasen gemäß der anliegenden Signalkombination der Schaltereingänge 261 bis 266.

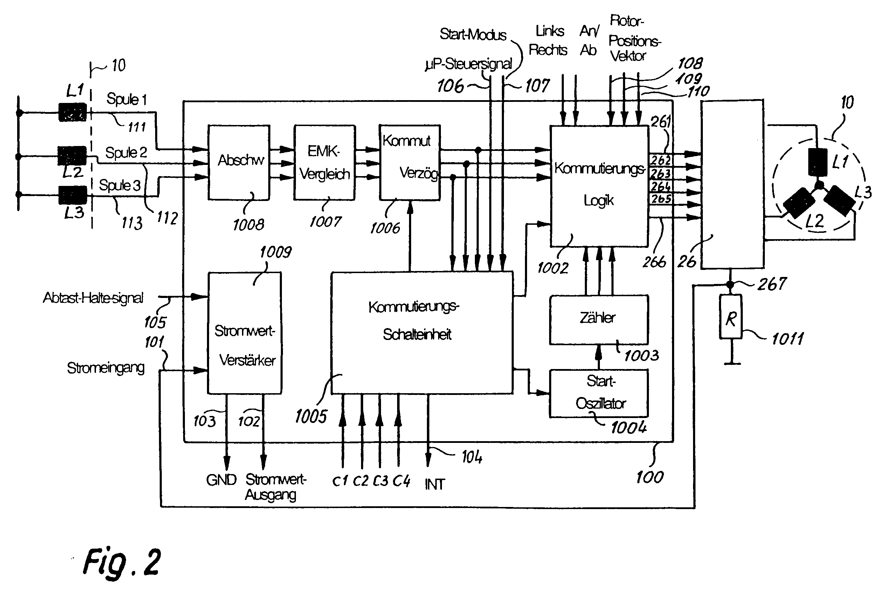

Der resultierende Motorgesamtstrom wird über einen beliebigen Stromsensor, z.B. in Fig. 2 der Meßwiderstand 1011, gemessen und über den Stromsensorausgang 267 als Meßsignal dem Eingang 101 des Kommutierungsprozessors 100 zugeleitet.

Weitere Elemente, die in der Zeichnung nicht dargestellt sind, können z.B. in einer Regelungseinheit bestehen, die dafür sorgt, daß den einzelnen Phasen des Motors 10 eine vorgegebene Stromstärke in vordefinierter Höhe aufgeprägt wird.

Eine solche Einprägung vordefinierter Ströme kann z.B. dadurch bewirkt werden, daß konventionelle, linear wirkende Reglerstufen verwendet werden. Sie kann aber auch darin bestehen, daß zu diesem Zweck handelsübliche Schaltregler herangezogen werden.

Aufgabe des Kommutierungsprozessors 100 ist es im wesentlichen, Stromsensorsignale 267 sowie Spannungssignale 111, 112 und 113 der drei Motorphasen L1, L2, L3 ( Fig. 2 ) entgegenzunehmen und hieraus Kommutierungssignale zu errechnen.

Darüberhinaus besitzt der Kommutierungsprozessor 100 analoge und digitale Steuer- und Komunikationsverbindungen 102 - 110 zu dem übergeordneten Prozessor 23. Der Kommutierungsprozessor 100 kann bereits für sich allein, d.h. ohne den Mikroprozessor 23, aber im Zusammenspiel mit der Endstufeneinheit 26, für einen ordnungsgemäßen Betrieb des Motors 10 sorgen.

Darüberhinaus ist es aber möglich, in einer prozessorgesteuerten Betriebsweise gezielte Bewegungsabläufe des Motors durchzuführen oder unter Verzicht auf den motorischen Betrieb nur eine Positionserkennung durchzuführen. Zu diesem Zweck ist das Zusammenspiel von Prozessor 23 , Kommutierungsprozessor 100 und Endstufeneinheit 26 erforderlich. Eine Aufgabe des Prozessors 23 ist es, über die Sample- und Hold-Signalleitung 105 Zeitpunkte festzulegen, zu denen Stromsensorsignale 267 ermittelt werden sollen. Diese Stromsensorsignale werden dem Prozessor 23 über die Stromleitung 102 zugeführt. Bei Bedarf kann der Kommutierungsprozessor 100 den Mikroprozessor 23 auch über die Leitung 104 auffordern, einen Strommeßwert entgegenzunehmen oder sonstige Prozessoraktivitäten auszuführen. Wesentliche Aufgabe des Prozessors 23 ist es, anhand solcherart erhaltener Stromsensordaten die korrekte Position des Rotors des Motors 10 zu berechnen. Die so errechneten Daten können z.B. auf einem Anzeigegerät zur Anzeige gebracht werden. Sie können aber auch einem übergeordneten Rechnersystem zur weiteren Be- und Verarbeitung mitgeteilt werden. Diese Positionsinformation kann über die Positionsleitungen 108 - 110 dem Kommutierungsprozessor 100 mitgeteilt werden, der seinerseits aufgrund dieser Information eine korrekte Kommutierung des Motors 10 vornehmen kann.

Wie aus Fig. 2 ersichtlich, besteht der Kommutierungsprozessor 100 im wesentlichen aus folgenden Einheiten:

Zentraler Bestandteil des Kommutierungsprozessors 100 ist die Kommutierungslogik 1002. Diese berechnet aus extern vorgegebener und über die Leitung 108 - 110 eingespeister Positionsinformation oder aus Spulenspannungen, die über Leitungen 111 - 113 gemessen werden, zunächst den Kommutierungszeitpunkt, d.h. den nächsten Zeitpunkt, zu dem eine Kommutierung der Motorströme stattfinden soll.

Zu diesem Zweck wird ein Kommutierungsschaltsignal bzw. Ansteuersignal erzeugt, welches über Signalleitung 261 bis 266 der Endstufeneinheit 26 mitgeteilt wird. Anstelle der direkten Übermittlung von Schaltsignalen kann natürlich auch eine Übermittlung solcher Signale in kodierter Form erfolgen.

Die Kommutierungslogik 1002 wird darüberhinaus von einer Kommutierungssteuereinheit 1005 beeinflußt, die auf verschiedene externe Signale reagieren kann.

Solche Signale können z.B. das Start-Mode-Signal 107 sein oder das Mikroprozessor-Anwesenheitssignal 106. Ausnahmesignale C1 - C4 können ebenfalls die Steuereinheit 1005 beeinflussen. Ebenso wird die Steuereinheit 1005 beeinflußt durch Signalspannungen, die sich aus den an den Eingängen 111-113 anliegenden Spulenspannungen des Motors 10 ableiten.

Zur Bewertung solcher Spulenspannungen kann vorgesehen werden, daß entweder Spulenspannungen aus dem Leerlaufbetrieb verwendet werden oder daß Spulenspannungen aus dem bestromten Betrieb untersucht werden. Hierfür ist ein Abschwächungsglied 1008 vorgesehen sowie eine Spannungsvergleichseinheit 1007 sowie eine Signalverzögerungseinheit 1006.

Die Signale von den Strängen L1 bis L3 kommen also zuerst zum Abschwächungsglied 108, von dort zur Spannungsvergleichseinheit 1007 und schließlich von dort zur Signalverzögerungseinheit 1006, von wo sie zur Kommutierungslogik 1002 und zur Kommutierungssteuereinheit 1005 weitergegeben werden. Auf diese Weise wird bei Erreichen einer genügend hohen induzierten Spannung (EMF) in den Strängen L1 bis L3 auf Kommutierung durch die induzierte Spannung umgeschaltet.

Eine weitere Einrichtung des Kommutierungsprozessors 100 ist die Stromerfassungseinheit 1009. Diese hat die Aufgabe, Stromsensorsignale 267 zu erfassen, zu verstärken und aufzubereiten.

Dies geschieht dadurch, daß zu gegebenen Zeiten die Stromsensorsignale 267 verstärkt und gespeichert werden. Auf diese Weise können auch schnell veränderliche Stromabläufe gewissermaßen eingefroren werden und dem Mikroprozessor 23 über den Stromausgang bzw. die Stromsignalleitung 102 zur weiteren Verarbeitung zugeleitet werden. Der Prozessor 23 hat dann genügend Zeit, diese Stromsignale auszuwerten, da die gespeicherten Signale sich zunächst nicht weiter verändern. - Ergänzend zu den internen Schaltmitteln besitzt der Kommutierungsprozessor 100 gewöhnlich externe Schaltmittel, wie Widerstände und Kondensatoren. Diese sind in Fig. 1 und Fig. 2 nicht dargestellt.

Weitere Einzelheiten des Kommutierungsprozessors 100 sind ein Startoszillator 1004 sowie ein Zähler 1003 zur wahlweisen Erzeugung von Zeitvorgaben bzw. Kommutierungsmustervorgaben. Die eigenständige Funktion des Kommutierungsprozessors 100 ohne zugehörigen Mikroprozessor 23 beruht, wie erwähnt, auf der Auswertung der induzierten Spannungen (EMF) an den Motorsträngen L1 bis L3, wie sie z.B. im Leerlauf erzeugt werden.

Diese Betriebsweise ist jedoch nur praktikabel, wenn der Rotor des Motors bereits in Bewegung ist. Auch ein Positionsmeßverfahren unter Heranziehung dieser Signale benötigt für den korrekten Betrieb unter Ausnutzung dieser Signale den bewegten Rotor.

Im Falle des Motorstillstandes ist entweder eine ungerichtete Startbewegung zu initiieren, oder aber man muß über eine spezielle Bestromung der Motorstränge L1 bis L3 und Ausmessung der einzelnen Strangströme die erforderliche Meßinformation beschaffen.

Die Untersuchung dieses Verlaufs der Strangströme kann sehr variabel gestaltet werden. Die einfachste Möglichkeit besteht darin, den zeitlichen Verlauf des Motorsummenstroms auszuwerten.

Darüberhinaus kann es erfindungsgemäß von Vorteil sein, eine Bestromung für mehrere Statorstränge zu Meßzwecken durchzuführen und zu unterschiedlichen Zeitpunkten die Stromstärken zu registrieren. Je nach Leistungsstärke der zu diesem Zweck verwendeten Prozessoren, d.h. Mikroprozessor 23 und/oder Kommutierungsprozessor 100, werden also entweder nur zu ausgesuchten Zeitpunkten ein oder mehrere Stromwerte, insbesondere Strommaxima, registriert, oder es werden nur zu definierten Stromwertschwellen zugehörige Zeitpunkte registriert, oder es werden ein oder mehrere Stromverläufe nach Zeit und Intensität anhand jeweils mehrerer Meßpunkte registriert. Die solcherart registrierten Werte stellen implizit Maßzahlen für die gesuchten und rotorstellungsabhängigen Induktivitäten oder Gegeninduktivitäten der Motorstränge dar.

Unter geeigneten Voraussetzungen kann es sich auch um Maßzahlen für transformatorische Koppelverhältnisse handeln.

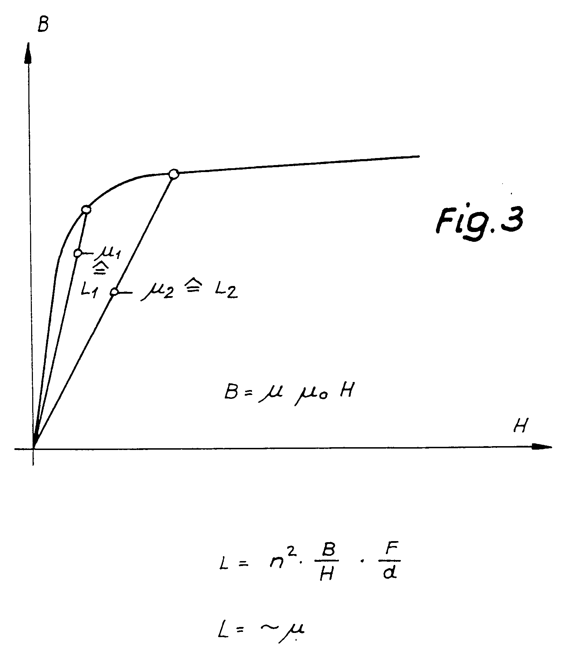

Wie Fig. 3 zeigt, gelingt eine Positionsinformationsbeschaffung durch geeignete Bestromung von Statorsträngen dadurch, daß durch unterschiedlich hohe Bestromung die Eisenanteile eines magnetischen Kreises, dem die Spulen dieses Stranges angehören, in die Nähe der Sättigung oder in die Sättigung selbst gebracht werden. Dementsprechend ändert sich die Gesamtinduktivität einer beteiligten Spule, da sich gemäß der Spulenformel $L = n^2 \mu\mu_o F/d$ bei sonst konstanten Bedingungen in der Regel nur das $\mu$ ändert und somit jede Änderung der relativen Permeabilität eine proportionale Änderung der Induktivität L zur Folge hat. Wie es beim

7

Eisen der Fall ist, kann der nichtlineare Zusammenhang zwischen Feldstärke H und magnetischer Flußdichte ( Induktion ) B dazu verwendet werden, stromabhängige effektive Induktivitäten der beteiligten Statorspulen festzustellen.

Die Induktivität dieser Statorspulen wird nun jedoch nicht nur durch die Höhe des Spulenstromes beeinflußt sondern ebenfalls durch die Polarität von Permanentmagnete eines Rotors , welche Permanentmagnete diesen Statorspulen gegenüberstehen.

Dies beruht darauf, daß durch die Permanentmagneten eine Vormagnetisierung der Spulenkerne stattfindet,

so daß je nach Polarität des Spulenstromes eine Sättigung des Spulenkernes entweder schneller oder aber langsamer stattfindet als im neutralen Fall, d. h. ohne permanentmagnetische Vormagnetisierung. Bei üblicher Auslegung der Magnetkreise von Motoren der gattungsgemäßen oder allgemeiner Art wird zumeist versucht, die magnetische Flußdichte in den Eisenteilen weit unterhalb der Sättigung zu halten, um Streuflupanteile klein zu halten.

Da die durch nominelle Bestromung sowie durch Bewegung des Rotors hervorgerufene Änderung der Statorspuleninduktivitäten gewöhnlich nur wenige Prozent beträgt, ist es für die störungsarme Meßdatenerfassung zur Positionsfeststellung wichtig, durch zusätzliche Maßnahmen eine möglichst große Änderung der Induktivität über einen Bereich der Motorbewegung von 360 ° el. zu erzielen.

Zu diesem Zweck kann z. B. der Magnetkreis des Motors modifiziert werden. Eine Optimierung in Hinblick auf große Variation von Spuleninduktivitäten in Abhängigkeit von der Rotorposition kann möglicherweise eine Minderung des maximalen Motorwirkungsgrades zur Folge haben.

Es ist also nach dem erfindungsgemäßen Gedanken von Vorteil, nicht nur eine Spule zu bestromen, sondern auch mehrere.

Ebenso ist es von Vorteil, kurzfristig, d. h. im Bereich von einigen zehn Mikrosekunden (z. B. von 10-2000 Mikrosekunden) und im Vergleich zur normalen Motorbestromung relativ stark zu bestromen.

Dementsprechend ist es von erfindungsgemäßem Vorteil, eine Kombination von Spulen in einer Weise zu bestromen, die für Antriebszwecke normalerweise nicht verwendet wird. Wird eine solche Bestromung zeitlich begrenzt, so sind auch keine nennenswerten Wirkungsgradverluste des Motors im motorischen Betrieb zu befürchten.

Zum Beispiel kann man bei einer Ausführungsform der Erfindung so vorgehen, daß zwei Statorspulen eines dreiphasigen Motors kurzfristig sehr hoch mit Strom beaufschlagt werden und zwischenzeitlich die dritte Statorspule mit einem hohen und kurzen Stromimpuls bestromt wird. Die auf solche Art gewonnenen Strom-Zeit-Informationen sind gewöhnlich aussagekräftiger als vergleichbare Informationen, die mit herkömmlichen Mitteln und Verfahren nach dem Stande der Technik erzielt werden.

Um die genannten Unterschiede in der Induktivität zu erzielen, ist es, wie im Vorhergehenden ausgeführt, also nützlich, einige der vorhandenen Spulen so zu bestromen, daß sich ihre ferromagnetischen Kerne möglichst in der Nähe von oder im Bereich der Sättigung befinden.

Eine zusätzliche Vormagnetisierung durch Permanentmagnete innerhalb des Magnetkreises oder der Magnetkreise kann, wie erwähnt, hilfreich sein, ist aber nicht notwendigerweise Voraussetzung.

Fig. 22 A zeigt bei einem Motor den Verlauf einer Spuleninduktivität über den Drehwinkel des Rotors.

Je nach Motorkonstruktion ergeben sich Variationen der Induktivität im Bereich von einigen bis mehreren Prozent. Wie aus Fig. 22 A ersichtlich, ist bei diesem Motortyp diese Funktion periodisch mit einer Periode von 180 °el.

Bei Anwesenheit permanentmagnetischer Vormagnetisierung wird diese Kurve asymmetrisch (Fig. 22 B) und besitzt dann eine Periode von 360 ° el., so daß eine eindeutige Messungen in diesem Winkelbereich ( 360 ° el ) ermöglicht wird. Der Verlauf der Kurve in Fig. 22 B hängt von der Stärke der Vormagnetisierung ( durch einen Permanentmagneten ) ab und kann durch zusätzliche Bestromung weiterer Spulen noch verstärkt werden. Hierbei sind die so bestromten Spulen teilweise in der Sättigung.

Fig. 22 C zeigt die gleichen Verhältnisse wie in Fig. 22 B, also die Induktivität aufgetragen in Polarkoordinaten und abhängig vom Drehwinkel des Motors.

Dieser Verlauf ist für jede der Motorspulen ähnlich. Im Vergleich zu einem benachbarten Strang wird man jedoch einen entsprechenden Phasenversatz von 360 ° el. : n feststellen, wobei n die Anzahl der Motorstränge bezeichnet. Dies bedeutet jedoch folgenden erfindungsmäßig aufgefundenen Zusammenhang: Besitzt ein Motor z. B. sechs Stränge und es werden von allen sechs Strängen nacheinander, aber fast gleichzeitig Induktivitätsmessungen durchgeführt, so definieren die erhaltenen Meßwerte ebenfalls eine Kurve, die z. B. auch in Polarkoordinaten gezeichnet werden kann. (Fig. 22C )

Alle so ermittelten Kurven sind, unabhängig von der Rotorstellung, von der gleichen Grundform.

Sie sind gegenüber einer normierten Darstellung, d. h. der einer Grundstellung zugeordneten Kurve, jedoch um einen Phasenwinkel verdreht. Dieser Phasenwinkel ist überraschend gleichzeitig ein Maß für die mechanische Rotor- oder Läuferposition. Es ist ersichtlich, daß nun die Abhängigkeit der Induktivität eines Stranges von der Position des Rotors möglichst stark sein sollte, um eine genaue und eindeutige Messung durchführen zu können.

Eine zusätzliche erfindungsgemäße Möglichkeit, diese Abhängigkeit herbeizuführen, besteht darin, Permanentmagneten des Rotors so auszulegen, daß eine ungleichmäßig hohe effektive Feldstärke dieser Permanentmagnete erreicht wird.

Dies kann z. B. dadurch geschehen, daß bei der Magnetisierung des Rotors eine ungleichmäßig hohe Magnetisierung vorgenommen wird oder daß nach erfolgter Magnetisierung eine gezielte Abmagnetisierung einzelner Magnetpole durchgeführt wird.

Eine andere Möglichkeit besteht darin, auf eine Kombination von gleich starken Nord- und Südpolrotormagnetpolen eine gleichartige folgen zu lassen, deren effektive Feldstärke jedoch um ein konstantes Maß reduziert worden ist.

Diese Zusammenhänge werden anhand der Fig. 11 B und 11 C näher erläutert. In Fig. 11 C sind z.B. der Rotormagnetpol 501 und 502 stärker als der Rotormagnetpol 503 und 504 magnetisiert.

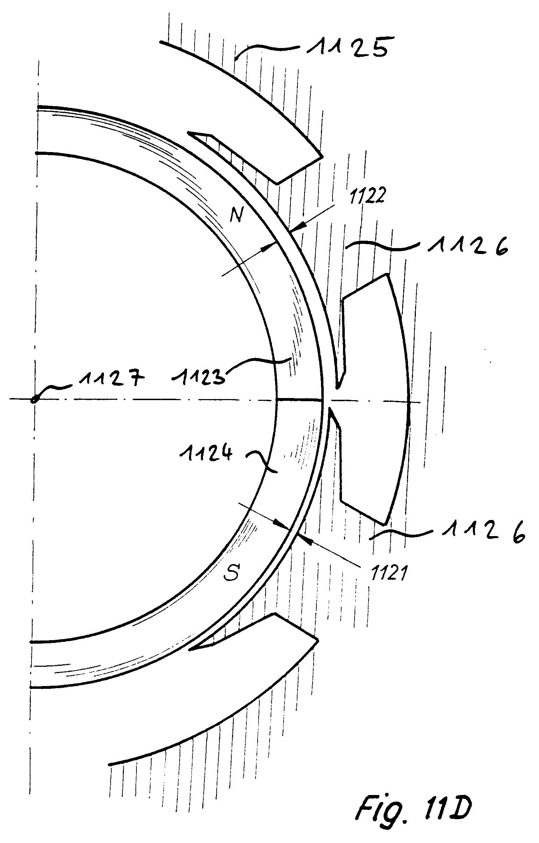

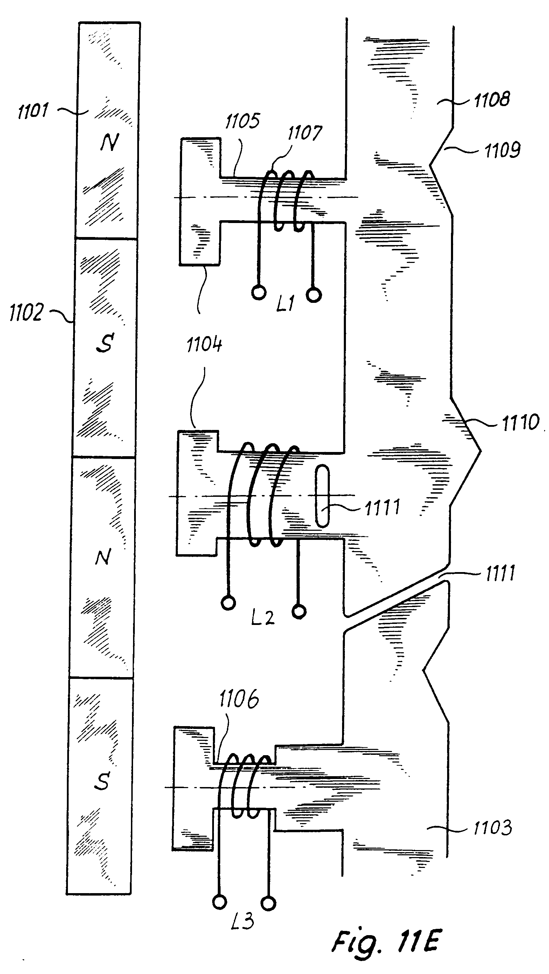

Anstelle unterschiedlich stark magnetisierter Permanentmagnete des Rotors kann alternativ oder zusätzlich auch eine Anordnung unterschiedlich großer Luftspalte 1121, 1122 verwendet werden. Dies zeigt Figur 11 D.

Die gleiche Wirkung wird durch die Verwendung einer Anordnung von magnetischen Teilwiderständen erreicht, die eine unterschiedliche Größe aufweisen. Dies kann z. B. dadurch eingerichtet werden, daß die ferromagnetischen Spulenkerne unterschiedlich groß ausgelegt werden oder daß Rückschlußelemente der Magnetkreise einen unterschiedlichen magnetischen Widerstand erhalten, sei es durch Variation von Länge oder Querschnitt, sei es durch Einfügungen von Luftspalten. Das gezeichnete Ausführungsbeispiel Fig. 11 E stellt in schematischer Form einen Linearmotor dar, welcher als Läuferelement einen Permanentmagneten besitzt mit Nordpolen 1101 und Südpolen 1102. Gegenüber den Magnetpolen befindet sich die Statoreinheit 1103 mit Statorpolschuhen 1104. Über speziell ausgeformte Statorstege in länglicher Form (1105) oder kurzer Form (1106) sind die Statorpolschuhe mit den Rückflußblechen 1108 verbunden.

Die Statorstege selbst sind mit entsprechenden Spulen 1107 bewickelt. Die Rückflußbleche 1103 können gegenüber dem normalen Querschnitt einen reduzierten Querschnitt 1109 bzw. einen verstärkten Querschnitt 1110 aufweisen. Auch die Einfügung eines Luftspaltes 1111 kann zweckdienlich sein. Der Vorteil dieser Anordnungen ist darin zu sehen, daß durch die unterschiedlich hohe Magnetisierung innerhalb des magnetischen Kreises eine zusätzliche, ortsabhängige Information (Kodierung) in den Motor oder Positionssensor eingebracht wird. Auf diese Weise wird damit eine präzisere als auch eine geometrisch weiterreichende Positionsbestimmung ermöglicht, die eine absolute Positionsbestimmung innerhalb des Drehvollwinkels von 360 ° el. ermöglicht. Die erfindungsgemäße Vorgehensweise, gemäß der durch hohe und impulsartige Bestromung einige ferromagnetische Anteile des Magnetkreises in Sättigung oder in Nähe der magnetischen Sättigung gebracht werden, setzt naturgemäß Magnetkreise voraus, die mit Permanentmagneten genügend hoher Koerzitiv-Feldstärke ausgestattet sind, da es durch die Bestromung zu Positionsmeßzwecken nicht zu einer Entmagnetisierung der Magnete kommen darf. Dementsprechend ist bei der Verwendung von Alnico-Magneten diesem Punkt besondere Beachtung zu schenken. Bei Verwendung moderner Magnetwerkstoffe wie z. B. Seltenerd-Kobalt-Materialien oder Neodyn-Eisen-Bor-Materialien ergeben sich hier i. d. R. keine Probleme.

Vor der Berechnung einer aktuellen Position des Rotors oder Läufers muß zunächst eine genügend große Anzahl an Meßwerten erfaßt werden. Es ist zweckmäßig, die Erfassung von Meßwerten und die zugehörige Auswertung zu separieren, damit die Meßwerterfassung in möglichst kurzer Zeit erfolgt. Diese Forderung ist um so stärker zu beachten, je schneller sich der Rotor oder Läufer des Motors bereits bewegt. Anderenfalls ist mit einer Mischung von Meßwerten aus verschiedenen Positionen zu rechnen, so daß eine eindeutige Rekonstruktion nur schwierig oder gar nicht mehr möglich ist. In der Auswertephase sind Zeitbeschränkungen dieser Art nicht mehr so kritisch. Trotzdem ist es günstig, die Auswertephase auf ein zeitliches Minimum zu limitieren, um durch eine möglichst große Anzahl an Meßwerten pro Zeiteinheit möglichst umfassende Meßdaten zu erhalten.

Für die Erfassung der Meßwerte eignet sich am besten folgendes Schema, auch wenn andere Vorgehensweisen ausführbar sind:

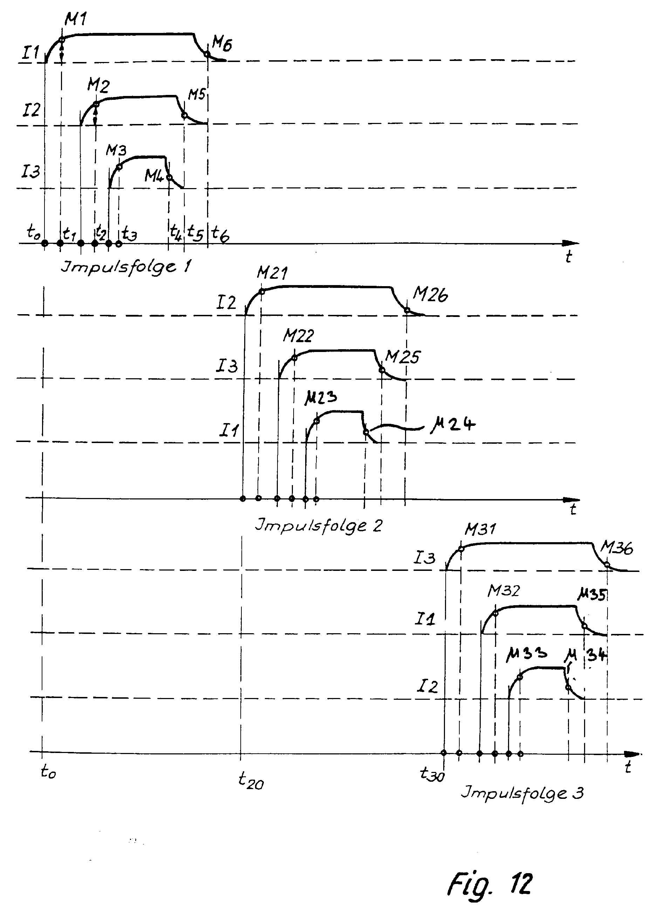

- Bestromung einer vorbestimmten Statorwicklung mit dem Ziel, hohe Magnetisierung von deren ferromagnetischem Kern zu erreichen.
- Registrierung des Stromes in dieser Statorwicklung zu mehreren Zeitpunkten. Dieser Stromverlauf wird z. B. in Fig. 12 in der Impulsfolge 1 mit 11 bezeichnet. Zum Beispiel kann neben der kontinuierlichen Stromregistrierung auch nur ein einzelner Meßpunkt M1 beobachtet werden. Für diesen wird z. B. nach einer vorgegebenen Zeitdifferenz t1-t0 der zugehörige Stromwert bestimmt. Alternativ kann zu einem vorgegebenen Stromwert, z. B. die Hälfte des maximalen Stromwertes, der Zeitbedarf ermittelt werden, der erforderlich ist, bis der Strom von 0 auf diesen Wert angestiegen ist.

( Der Strom I1 wird bei t o eingeschaltet und bei t 1 gemessen ).

Dieser Vorgang wird parallel dazu oder mit geringfügigem Zeitversatz, d. h. im Bereich von ca. 10-1000 Mikrosekunden, in einer weiteren Statorspule wiederholt, ohne daß die erste Statorspule abgeschaltet wird.

Figur 12 zeigt diesen zeitlichen Zusammenhang für die Bestromung einer gewählten Anzahl von drei Spulen, deren Strom mit I1, I2 und I3 bezeichnet wird. Sofern weitere Spulen existieren, können für eine weitergehende Informationsbeschaffung ein oder mehrere zusätzliche Vorgänge der gleichen Art auf eine vierte oder weitere Statorspulen angewendet werden. - Nachdem alle zu bestromenden Statorspulen bestromt sind, wird entweder vollständig und gleichzeitig abgeschaltet oder, wie das in Fig. 12 für die Impulsfolgen 1, 2 und 3 gezeigt ist, eine definierte Abschaltvorgehensweise ausgeführt. Auch in diesen beiden Fällen können ebenfalls Zeit und/oder Amplitudenmessungen ausgeführt werden, z.B. die Amplituden M4, M5, M6 zu den Zeitpunkten t4, t5 bzw. t6.

So ist es z. B. möglich, die Spulen in umgekehrter Reihenfolge im Vergleich zur Einschaltfrequenz stromlos zu schalten. Auf diese Weise erhält man in einer ersten Impulsfolge 1 einen ersten Satz von Meßwerten, der im einfachsten Falle aus einem einzigen Meßwert besteht.

Werden pro Spule bereits zwei Meßwerte gewonnen, wie das in Fig. 12 gezeigt wird, so stehen für einen Motor mit drei Spulen bereits sechs Meßwerte M1 bis M6 zur Verfügung.

Darüberhinaus ist es natürlich möglich, aus ansteigenden und abfallenden Flanken zusätzliche Meßpunkte zu gewinnen und in die weitere Berechnung einfließen zu lassen.

Im allgemeinen wird man versuchen, aus der Vielzahl solcher Meßwerte einige wenige repräsentative herauszukristallisieren.

Mit einer einzelnen ersten Impulsfolge ist es im allgemeinen jedoch noch nicht möglich, eine Positionsbestimmung durchzuführen. Zu diesem Zweck müssen weitere Sätze von Meßwerten beschafft werden. Die zugehörige Vorgehensweise wird in Fig. 12 mit den Bestromungskurven Impulsfolge 2 und Impulsfolge 3 skizziert. Es handelt sich hierbei um einen gleichartigen Vorgang wie bei der genannten Impulsfolge 1, wobei die Bestromung jedoch mit einer in der Nähe der Spule 1 befindlichen Statorspule beginnt.

Für einen Motor mit drei Spulen kann z. B. mit der Bestromung der Spule 2 begonnen werden, worauf kurzfristig danach die Bestromung von Spule 3, danach Spule 1 ausgeführt wird. Sinngemäß zum Bestromungsvorgang während der Impulsfolge 1 wird auch bei Impulsfolge 2 zu gegebenen Zeiten die Bestromung der einzelnen Spulen abgebrochen. In einer Impulsfolge 3 wiederholt sich das Spiel von neuem, jedoch beginnend mit Spule 3 gefolgt von Spule 1 und später Spule 2. Sind mehr als drei Spulen vorhanden, so können kompliziertere Bestromungssequenzen ausgeführt werden. Die Bestromungsvorschrift zur quasi gleichzeitigen Bestromung weiterer Spulen wird sich jeweils entsprechend auf Spulen beziehen, die vergleichbare Abstände zur zunächst bestromten Spule besitzen werden. Dementsprechend kann, nachdem zunächst mit der Bestromung einer Spule begonnen worden ist, z. B. eine unmittelbar benachbarte Spule ebenfalls bestromt werden.

Der zweite Bestromungsvorgang kann sich aber auch auf eine Spule beziehen, die sich in einiger Entfernung von der zuerst bestromten Statorspule befindet. Eine Festlegung der nützlichsten Spulenbestromungssequenz ist individuell je nach Motortyp vorzunehmen. Zum Zwecke der vollständigen Datenbeschaffung wird das Verfahren mehrfach wiederholt. Die Bestromung beginnt dann mit jeweils einer anderen Statorspule. Die Datenbeschaffung ist vollständig, wenn von allen Statorspulen des Motors ein nach gleichem Schema zyklisch erzeugter Meßwertsatz vorliegt.

Es ist jedoch auch möglich, eine einfachere Positionsbestimmung mit reduzierter Genauigkeit durchzuführen. Hierzu genügt eine kleinere Datenmenge, die nur aus Meßwertsätzen besteht, die von weniger Statorspulen herrührt, als es der Anzahl der tatsächlich im Motor oder Drehgeber vorhandenen Statorspulen entspricht.

Für dreiphasige Motoren mit z. B. sechs Statorspulen genügt zum Beispiel die Analyse von nur drei Meßwertsätzen. Hierbei ist es vorteilhaft, wenn die Meßwertsätze von jeder zweiten Spule beschafft werden.

Nachdem eine vorbestimmte Anzahl von Meßwertsätzen beschafft worden ist, wird die Auswertung vorgenommen (je nach Leistungsfähigkeit der Auswerteeinheit kann natürlich die Auswertung auch schon während der Beschaffung der Meßwertsätze durchgeführt werden). Aufgrund der erforderlichen Geschwindigkeit, mit der auch einfach strukturierte Datensätze ausgewertet werden müssen, wird für die Meßwertanalyse vorzugsweise ein spezieller Mikroprozessor oder Controller 23 eingesetzt, dessen Programm auf die zu lösende Positionserkennungsaufgabe zugeschnitten ist, der aber auch gleichzeitig für den regulären Motorbetrieb eingesetzt werden kann.

Zu diesem Zwecke kann z. B. ein Standard-Prozessor 23 mit zugehörigem, extern angeordneten Erweiterungsschaltkreis oder Kommutierungsprozessor 100 verwendet werden.

Eine weitere Möglichkeit besteht darin, die Einheiten 23 und 100 zusammenzufassen, so daß auf der gleichen Siliziumfläche eine standardmäßige Prozessoreinheit vorhanden ist, die um kundenspezifische Zusatz-

EP 0 536 113 B1

funktionseinheiten ergänzt ist.

Mittelwertbildung:

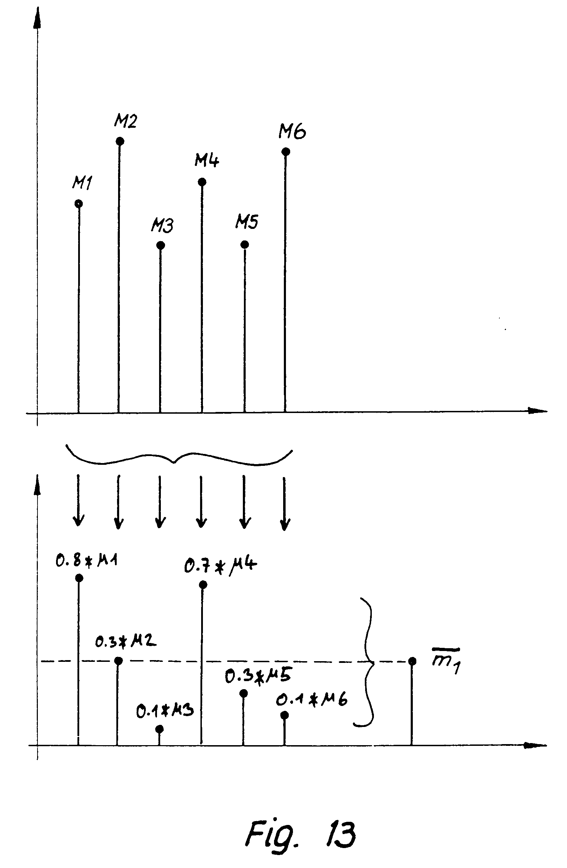

Die in einer Impulsfolge, z. B. der Impulsfolge 1 aus Figur 12, ermittelten Meßwerte sind zweckmäßigerweise zu einem einzigen, repräsentativen Meßwert zusammenzufassen. Da die Meßgenauigkeit der einzelnen, dort mit M1-M6 bezeichneten Meßwerte unterschiedlich hoch sein wird, ist es sinnvoll, bei der erforderlichen Mittelwertbildung eine Gewichtung durchzuführen. Dies kann z. B. darin bestehen, daß aus den Meßwerten M1-M6 ein Mittelwert m 1 errechnet wird nach folgender oder ähnlicher Rechenvorschrift (Fig. 13), wobei die Gewichtungsfaktoren individuell zu bestimmen sind, z.B. :

$$m1 = (0,8 * M1 + 0,3 * M2 + 0,1 * M3 + 0,7 * M4 + 0,3 * M5 + 0,1 * M6) / 6$$

Eine sinngemäße Mittelwertbildung mit den gleichen Koeffizienten kann für die Impulsfolge 2 auf die dort gezeichneten Meßwerte M21-M26 angewendet werden, was einen Mittelwert m2 ergibt.

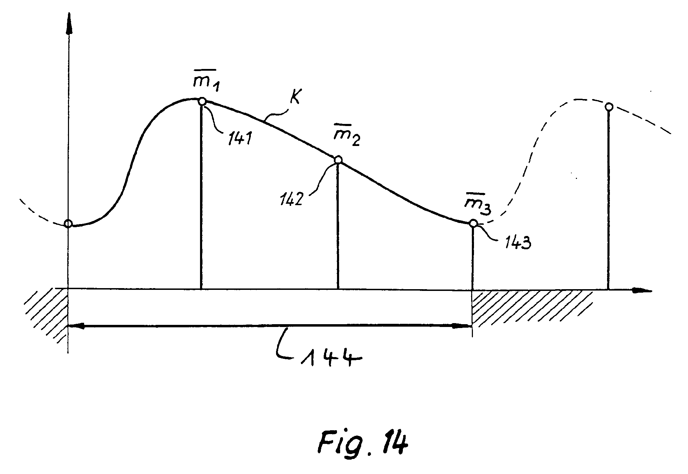

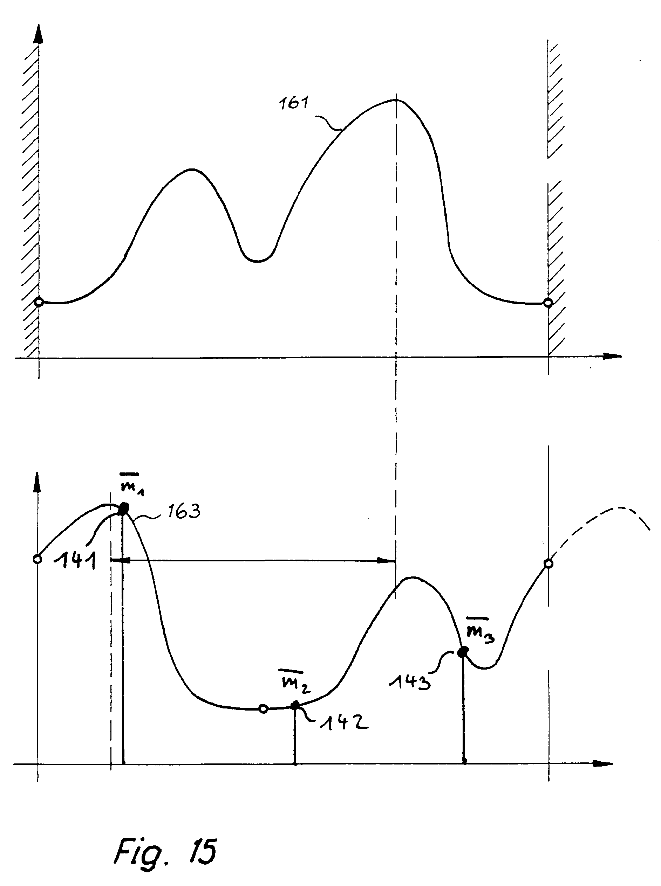

Das gleiche gilt für die dort ebenfalls gezeichnete Impulsfolge 3, bei der nun die Meßwerte M31-M36 sinngemäß mit den gleichen Koeffizienten multipliziert werden müssen, was einen Mittelwert m3 ergibt. - Die Mittelwerte m1-m3 beinhalten nun in impliziter Weise die gesuchte Positionsinformation, die in expliziter Form aus diesen Informationen noch zu berechnen ist. Figur 14 und Fig. 15 ( untere Hälfte ) zeigt in einer linearen Anordnung die Amplituden der berechneten Mittelwerte m1-m3.

Es kann im Spezialfall auch sein: m1 = M1 , m2 = M21, m3 = M31 etc.

Sind weitere Impulsfolgen vorhanden, z.B. nicht gezeichnete Impulsfolgen 4, 5, 6, etc., so sind die zugehörigen Mittelwerte m4, m5, m6 etc. durch vergleichbare Vorgehensweisen zu ermitteln.

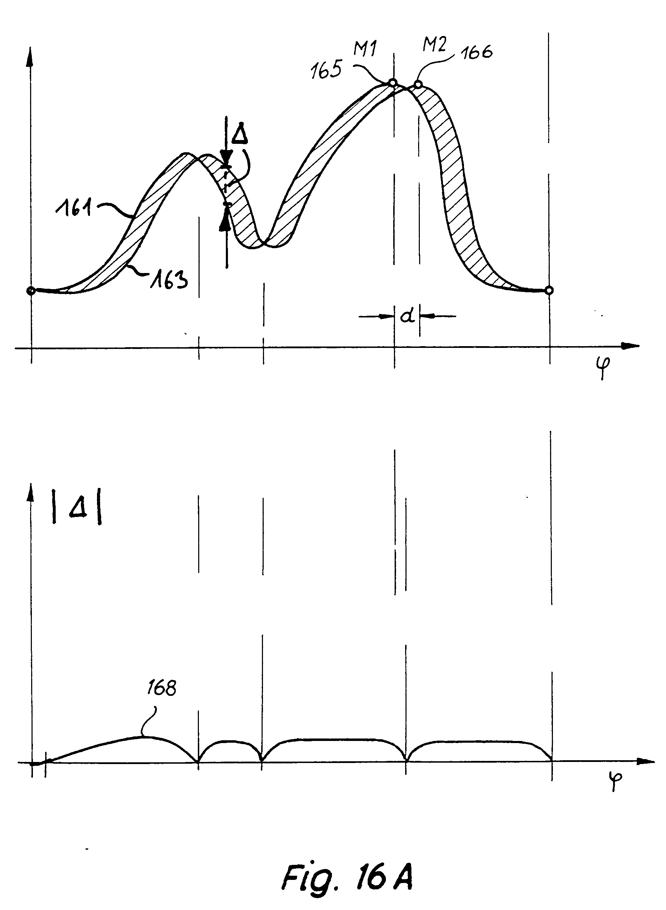

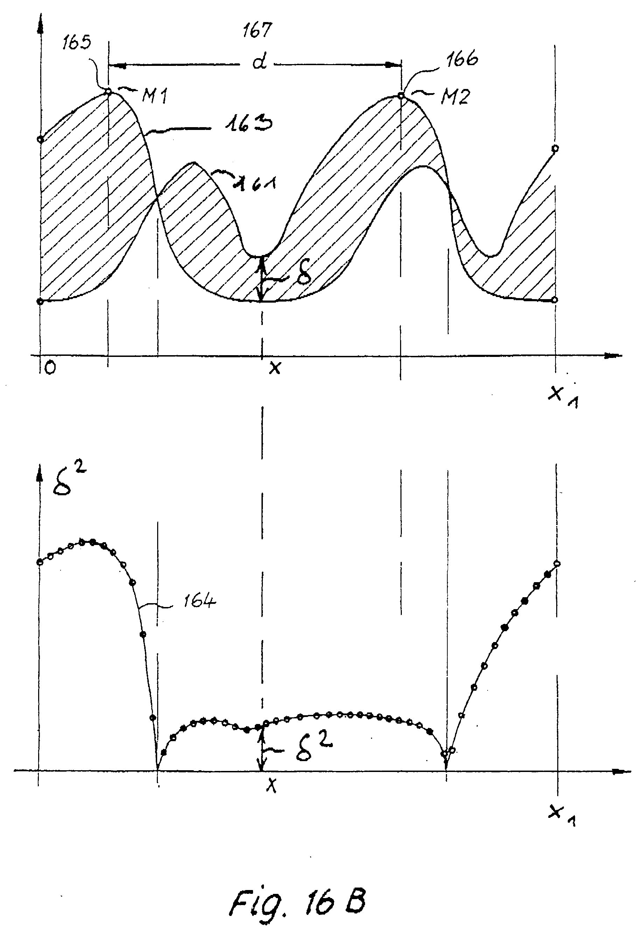

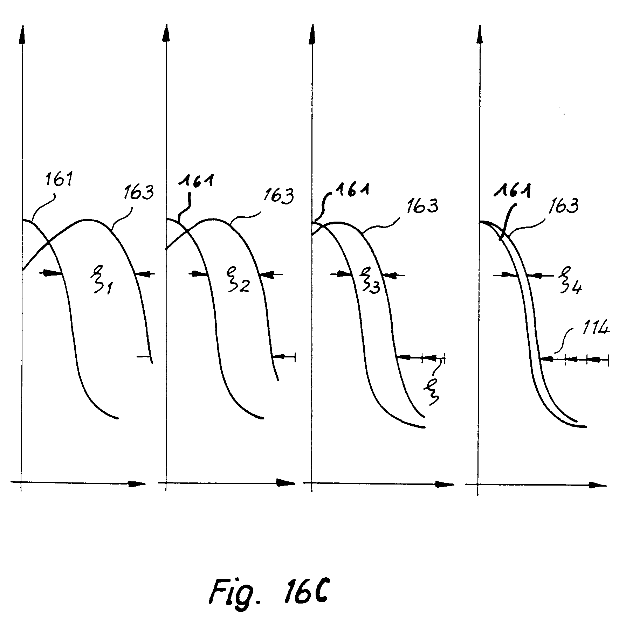

Wie die Auswertung solcher ermittelten Werte überraschenderweise gezeigt hat, kann durch jedes so aufgefundene Meßwertmultiplett eine im wesentlichen identische periodische Kurve K gelegt werden, wie z.B. in Fig. 14 gezeigt oder mit Bezugsziffer 161 bzw. 163 in Fig. 15, deren Phasenlage jedoch so lange variiert werden muß, bis die Meßwerte, hier z. B. m1-m3, auf der Kurve zu liegen kommen (Fig. 15, Fig. 16A ).

Das Maß der Periodizität für diese Kurve ist in Fig. 14 mit Bezugsziffer 144 gekennzeichnet .

Das Maß der genannten Phasenverschiebung ist bereits ein Kennwert für die tatsächliche Rotor- oder Läuferposition des Motors.

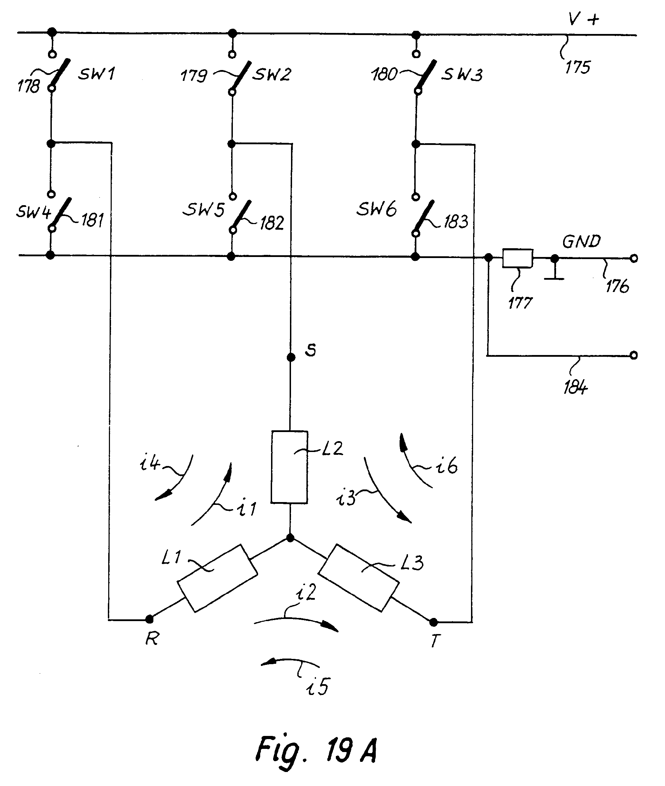

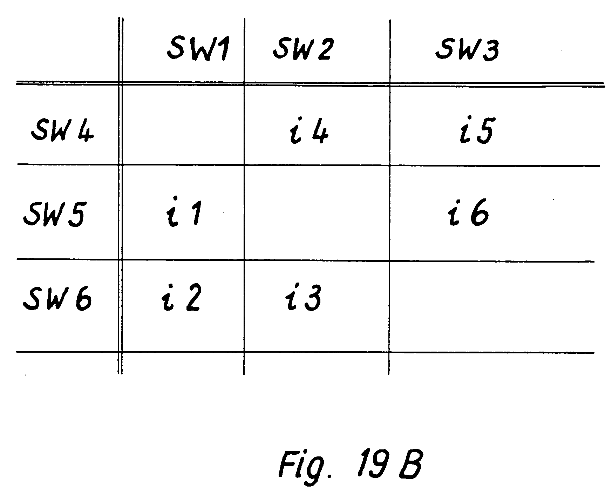

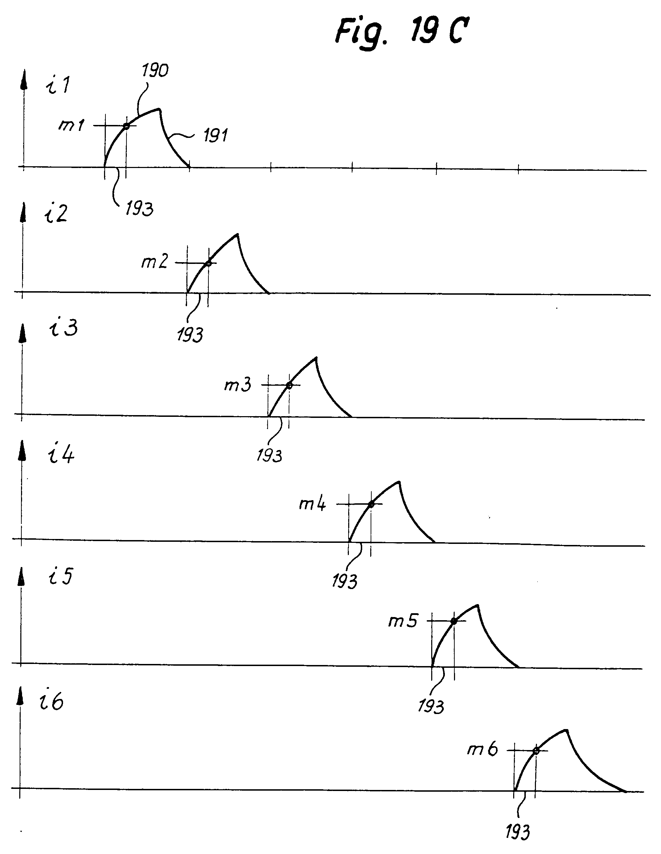

Eine Form zur Ermittlung von sechs Werten ml bis m6 zeigen Fig. 19A und Fig. 19B.

Drei Motorspulen L1, L2 und L3 mit Anschlüssen R, S und T werden über einen Schaltersatz SW1 - SW6 (Bezugsziffern 178 bis 183) bestromt. Jeweils einer der Schalter SW1 - SW3 und einer der Schalter SW4 - SW6 wird gleichzeitig geschlossen. Auf diese Weise findet ein Stromfluß von der Versorgungsleitung 175 über die Spulen und den Stromsensor 177 zur Massepotential-Leitung 176 statt, wobei die Größe des Stroms über Sensorleitung 184 erfaßbar ist. Die resultierenden Stromflüsse werden in Fig. 19B näher gekennzeichnet. In den Kreuzungspunkten von Zeilen und Spalten wird für je zwei Schalter der zugehörige Stromfluß angegeben. Auf diese Weise sind sechs Schaltmöglichkeiten vorhanden. Eine Bestromung zur Ermittlung der Rotorposition verläuft dann z.B. gemäß Fig. 19C .

Es wird zunächst mit SW1 und SW5 der Stromfluß il erzeugt, der gemäß einer steigenden Flanke 190 zunimmt, dessen Intensität nach dem Zeitintervall 193 gemessen wird und einen Wert ml liefert. Nach Erreichen einer vorgegebenen Bestromungszeit wird durch öffnen der Schalter der Strom abgeschaltet, was zu einer Abschaltflanke 191 führt. Dieses Verfahren mit relativ schnellen Anschalt- und Abschaltzeiten wird gemäß den anderen in Fig. 19B gezeigten Schalterkombinationen für weitere fünf Bestromungen i2 - i6 wiederholt, wobei jeweils nach dem Zeitintervall 193 der zugehörige Wert m2, m3, ..., m6 erfaßt wird und für die weitere Auswertung zwischengespeichert wird. Obwohl dieses Verfahren etwas aufwendiger ist als die Beschaffung von nur drei Werten m1, m2, m3, wird jedoch die Präzision der Rotorlagenbestimmung erhöht. Wie bereits erwähnt ist es Ziel, durch solcherart gewonnenen Meßwerte eine bereits bekannte Kurve zu legen, wobei die Phase so verschoben werden soll, daß die Meßwerte auf oder möglichst nahe an der Kurve zu liegen kommen.

Die rechnerische Ermittlung dieser Phasenverschiebung kann auf mehreren Wegen erfolgen.

Eine dieser Möglichkeiten besteht z. B. darin, zunächst eine Kurve K zu bestimmen, die die Meßwerte optimal miteinander verbindet.

Dieses Vorgehen hat den Vorteil, daß beim Vergleich einer gefundenen Kurve mit einer Referenzkurve dann nicht nur einige wenige sondern beliebig viele Punkte miteinander verglichen werden können (Fig. 14).

Auf diese Weise können die einzelnen Punkte einer gefundenen Kurve dann in feinen Schritten so lange verschoben werden, bis beide zu vergleichenden Kurven eine nahezu deckungsgleiche Lage aufweisen.

Um nun aus einem Meßwertsatz mit z. B. drei oder sechs oder weiteren Mittelwertspunkten eine möglichst glatte Kurve zu generieren, können verschiedene bekannte Rechenvorschriften herangezogen werden.

Eine dieser Rechenvorschriften besteht darin, gewonnene Mittelwerte m1-m n als Eingangsgrößen für eine Fourier-Analyse heranzuziehen.

Hierbei werden diese Mittelwerte mit geeigneten komplexen Koeffizienten, z. B. den n-ten Einheitswurzeln, multipliziert und einer komplexen Summation unterworfen. Das Verfahren wird in an sich bekannter Wei-

11

EP 0 536 113 B1

se für alle spektralen Komponenten einzeln ausgeführt. Diese spektralen Komponenten sind bereits Sinusoder Kosinus-Terme, anhand derer eine relativ glatte verbindende Funktion durch die Meßpunkte konstruiert werden kann. Die exakte funktionale Darstellung der verbindenden Kurve wird jedoch in bekannter Weise durch eine sogenannte Rücktransformation erhalten.

Erfindungsgemäß ist es jedoch von bestem Nutzen, nach einschlägig bekannten Rechenanweisungen eine sogenannte Spline-Funktion darzustellen, die eine optimierte kontinuierliche Verbindung zwischen allen Punkten des Meßwertsatzes darstellt. Die Generierung solcher Funktionen unterscheidet sich zum erstgenannten verfahren im wesentlichen dadurch, daß das ermittelte Spektrum in einer gezielten Weise modifiziert wird, oder daß die Funktionen z.B. durch Polynome dritten Grades approximiert werden.

Auf diese Weise wird eine begrenzte Anzahl von Punkten n 1...n m eines Mittelwertsatzes übergeführt in eine beliebige Anzahl von Punkten der angleichenden Spline-Funktion.

Zur Durchführung der Positions-Kennwert-Bestimmung sind die Referenzkurve 161 und die durch aktuelle Meßwerte definierte Ist-Kurve 163 miteinander zu vergleichen (Figur 15).

Dies wird auf folgende Weise ausgeführt:

Beide Kurven, im folgenden Meßfunktion und Referenzfunktion genannt, werden außerhalb des Periodizitätsbereichs 144 , periodisch durch einige solcher von der Länge des Periodizitätsbereichs 144 ergänzt.

Beide Kurven werden auf Korrelation, d. h. Übereinstimmung oder Ähnlichkeit, mit Hilfe eines üblichen Rechenverfahrens geprüft.

Dies geschieht erfindungsgemäß am zweckmäßigsten durch Anwendung der Methode der kleinsten Quadrate (Figur 16B), wo die Meßkurve mit 163 und die Referenzkurve mit 161 bezeichnet ist, deren Maxima 165 bzw. 166 den Abstand d , 167 , haben.

Hierbei wird für eine vereinbarte Anzahl von Funktionswerten von Meß- und Referenzfunktion die Differenz jeweils zweier zugeordneter Funktionswerte ermittelt und quadriert. ( Kurve 164 ) Das Ergebnis wird einer Gesamtsumme hinzuaddiert, d.h. die Kurve 164 wird zwischen 0 und x 1 integriert.

Nachdem für jedes Funktionswert-Paar diese Rechnung durchgeführt worden ist, wird anhand der Gesamtsumme die Ähnlichkeit erkannt.

Beträgt die so gefundene Summe, also das Integral der Kurve 164, nämlich null, so liegen identische Funktionen vor, der Phasenunterschied ist ebenfalls null.

Infolgedessen bedeuten kleine Summenwerte eine große Ähnlichkeit der Funktionen, große Summenwerte hingegen kleine Ähnlichkeit der Funktionen.

Es versteht sich, daß bei der genannten Summation über ein Standardintervall 0 bis x1 summiert bzw. integriert summiert werden muß, welches mindenstens so lang ist wie das durch z. B. die Referenzfunktion definierte.

Die Positions-Kennwert-Bestimmung wird nunmehr so durchgeführt, daß nach einem ersten Summationsvorgang weitere erfolgen. Dabei wird jedoch eine der beiden Funktionen incl. ihrer beidseitigen Ergänzungen jeweils um ein Phasenwinkelmaß xi 114 sukzessive weiter versetzt (Figur 16C).

Für diejenige Phasenverschiebung, die ein minimales Summationsergebnis aufweist, ist die Korrelation am größten, eine so aufgefundene Maßzahl der Phasenverschiebung kann demgemäß als Rotor-Positions-Kennwert verwendet werden.

Zum Beispiel kann in Fig. 16C mit der Phasendifferenz xi 4 bereits eine annähernd vollständige Übereinstimmung der Kurven 161 und 163 festgestellt werden.

Ein weiteres Verfahren besteht darin, Referenz- und Vergleichsfunktion so lange gegeneinander zu verschieben, bis die Summe der Absolutbeträge der Differenzen einer Anzahl von Funktionswerten von Referenz- und Vergleichsfunktion möglichst gering ist. Dieses Verfahren wird in Fig. 16 A dargestellt.

Die beiden zu vergleichenden Funktionen besitzen je ein Maximum 165 bzw. 166. Der Phasenversatz ist jeweils mit d gekennzeichnet. Durch die Differenzen der Funktion werden Flächen generiert, wobei die entstehende Gesamtfläche ebenfalls ein Maß für die Kongruenz beider Funktionen ist.

Wie im vorigen Fall auch, bedeutet ein möglichst geringes Vergleichsmaß, nämlich das Integral der Funktion 168 zwischen 0 und 360°el., eine gute Übereinstimmung der Kurven. Bei vollständiger Übereinstimmung beträgt das Differenzflächenmaß 0. Die auf diese Weise gewonnenen Maßzahlen der Rotorposition sind ersichtlich wesentlich genauer als das Ermitteln eines maximalen Wertes verschiedener Stützwerte der Funktion, wie es in der EU-A 251785 beschrieben wird. Allerdings ist der erforderliche Rechenaufwand zur Erzielung dieser verbesserten Genauigkeit größer, da zum einen zunächst die Funktionswerte der Spline-Funktion aus Stützwerten ermittelt werden muß und zum zweiten durch iterative Kurvenvergleichsoperationen die optimale Kurvenlage bestimmt werden muß.

Beide Verfahren können als Lösungsmöglichkeit zu einer Mustererkennungsaufgabe aufgefaßt werden. Zu dieser gestellten Aufgabe existieren jedoch erfindungsgemäß weitere Lösungen:

Ein weiteres dieser Verfahren beruht auf der Methode der Schwerpunktanalyse. Zu diesem Zweck werden die Werte m1, m2, etc. in graphischer Form repräsentiert, so daß eine Fläche in Form eines regelmäßigen oder unregelmäßigen Vielecks erzeugt wird. In einem besonders einfachen Fall ist aus nur drei Werten, d.h. Mittelwerten, m1, m2 und m3 eine Positionskennzahl zu errechnen.

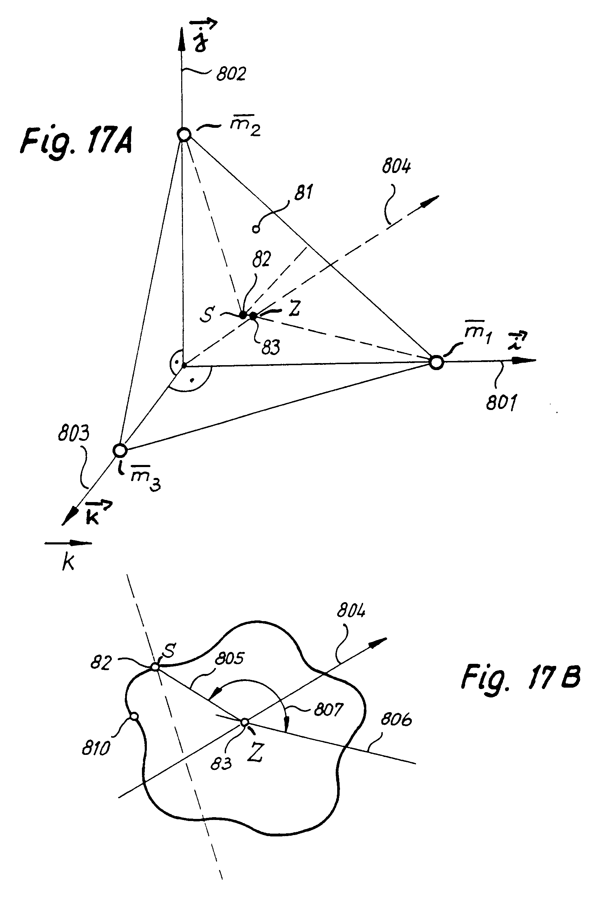

Die zugehörige erfindungsgemäße Vorschrift zur Berechnung eines Positionskennwertes besteht für diesen Fall darin, die drei Meßwerte m1, m2 und m3 als Achsenabschnitte in einem dreidimensionalen kartesischen Koordinatensystem einzutragen. Ein solches Koordinatensystem, welches durch die drei Einheitsvektoren i (801), j (802) und k (803) aufgespannt wird, ist in Fig. 17 A dargestellt. Dort ist auch die Raumdiagonale 804 dargestellt. welche durch den Nullpunkt und den Punkt mit den Koordinaten i, j, k geht, d. h. die Raumdiagonale wird durch Ursprung des Koordinatensystems mit den zugehörigen Einheitsvektoren i, j und k (801, 802, 803) und die Vektorsumme i + j + k definiert.

Ein erster, zweiter und dritter Meßwert m1, m2, m3 eines Wert-Tripels werden jeweils in Richtung i, j bzw. k aufgetragen.

Auf diese Weise wird ein Dreieck 81 definiert, dessen (Flächen-) Schwerpunkt S, 82, je nach zugrundegelegtem Meßwert-Tripel unterschiedlich liegt, da bei unterschiedlicher Lage der auszumessenden Rotor-Position unterschiedliche Meßwert-Tripel auszuwerten sind.

Der genannte Flächenschwerpunkt S kann zeichnerisch oder im praktischen Falle rechnerisch ermittelt werden und liegt auf einer Kurve 810 (Fig. 17 B), die im wesentlichen zykloidenartig um die Raumdiagonale 804 umläuft und die in Fig. 17 B in vergrößertem Maßstab dargestellt ist. Die Raumdiagonale 804 durchstößt das Dreieck 81 in einem Zentrum Z , Bezugsziffer 83 .

Zusammen mit dem Schwerpunkt 82, der sich abhängig von den Meßwerten ändert, definiert das Zentrum 83 eine auf dem Dreieck 81 befindliche Gerade 805 die, bezogen auf eine Gerade 806 zwischen Zentrum 83 und einem Eckpunkt, z. B. m1 des Dreiecks 81, in der Ebene des Dreiecks einen definierten Winkel 807 einschließt. Dieser Winkel 807 wird als Positionskennwert für die Rotorstellung herangezogen und weiterverarbeitet.

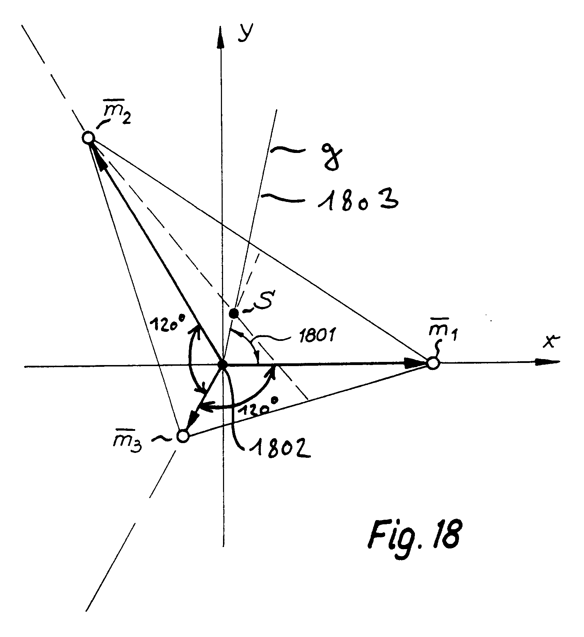

Anstelle der dreidimensionalen Darstellungsweise können die genannten drei Meßwerte auch in einer zweidimensional orientierten Darstellung ausgewertet werden (Fig. 18). Hierzu werden die drei Achsen des Raumes projiziert auf drei Geraden, die von dem Ursprung eines x - y - Koordinatensystems ausgehen und jeweils eine Winkeldifferenz von 120 ° besitzen.

Ausgehend von dem Ursprung werden Strecken in Richtung dieser Achsen abgetragen, die den Mittelwerten m1, m2, m3 proportional sind. Auf diese Weise wird ein Dreieck aufgespannt, dessen Schwerpunkt S nicht notwendigerweise mit dem Ursprung 1802 der drei Geraden zusammenfällt. Dieser Schwerpunkt kann in bekannter Weise auf zeichnerische oder rechnerische Weise konstruiert werden.

Je nach Form und Lage des generierten Dreiecks wird eine Gerade zwischen Schwerpunkt S und dem Ursprung der drei Achsen einen unterschiedlichen Winkel 1801 gegenüber einer dieser drei Achsen einnehmen. Zur Positionsbestimmung des Rotors oder Läufers eines Elektromotors wird nun dieser Winkel direkt herangezogen. Der Abstand des Schwerpunkts vom Ursprung spielt i. d. R. nur eine untergeordnete Rolle und kann ggf. zu Korrekturzwecken für die Positionsbestimmung des Rotors herangezogen werden.

Die Lage des Schwerpunktes kann in bekannter Weise durch Konstruktion der Seitenhalbierenden bestimmt werden oder alternativ unter Verwendung der Schwerpunktsformel, die hier z. B. auf drei gleichgewichtige Elemente m1, m2 und m3 angewendet werden muß.

Gemäß dieser Rechenvorschrift können die Anteile in X- und Y- Richtung (Fig. 18) separat errechnet werden.

Eine nähere Betrachtung dieses Verfahrens zeigt die rechnerische Wesensgleichheit mit einem weiteren Verfahren.

Da bei Fig. 18 nur die Winkellage 1801 des Schwerpunktes S bezüglich einer vom Ursprung 1802 ausgehenden Geraden 1803 gesucht wird, kann bei der rechnerischen Ermittlung des Schwerpunktes die sonst erforderliche Division, in diesem Beispiel-Fall durch 3, unterbleiben, so daß zur Ermittlung einer X-Komponente der Schwerpunktrichtung die einfache Addition der X-Werte der Eckpunkte dieses Dreiecks genügt. Das gleiche gilt für die Y-Werte des Dreiecks. In einer anderen Formulierung heißt dies, daß die Vektoren m1, m2, und m3, die vom Zentrum 1802 zu den Ecken des Dreiecks ausgehen, addiert werden müssen und daß der resultierende Vektor der Vektorsumme bereits in eine Richtung zeigt, die mit der gesuchten elektrischen Rotorposition im wesentlichen übereinstimmt.

Darüberhinaus kann das eben erläuterte Verfahren der Schwerpunktanalyse als Sonderfall aufgefaßt werden für alle Verfahren auf Grundlage von Fourier-Analysen bzw. -Transformationen.

Auch bei solchen Analysen bzw. Transformationen wird bei den Werten für Amplitude und Phase der sog. ersten Harmonischen einer durch mehrere Stützwerte definierten Funktion eine entsprechende Vektorsummierung durchgeführt.

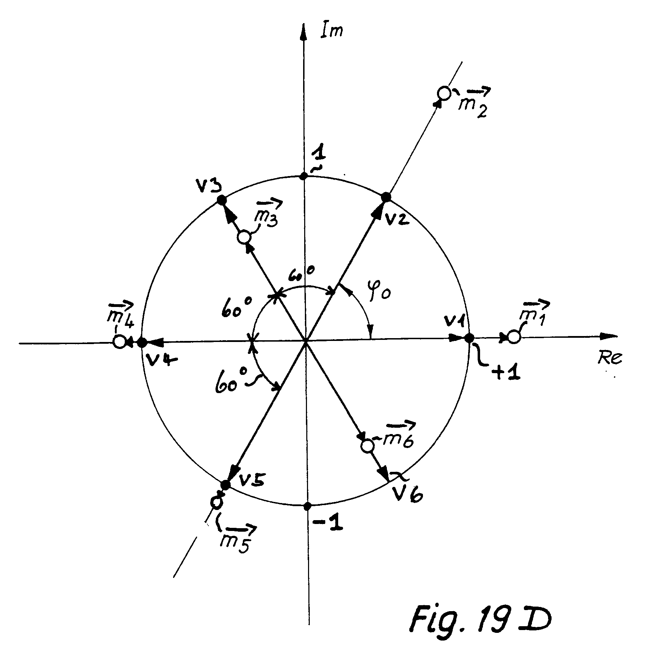

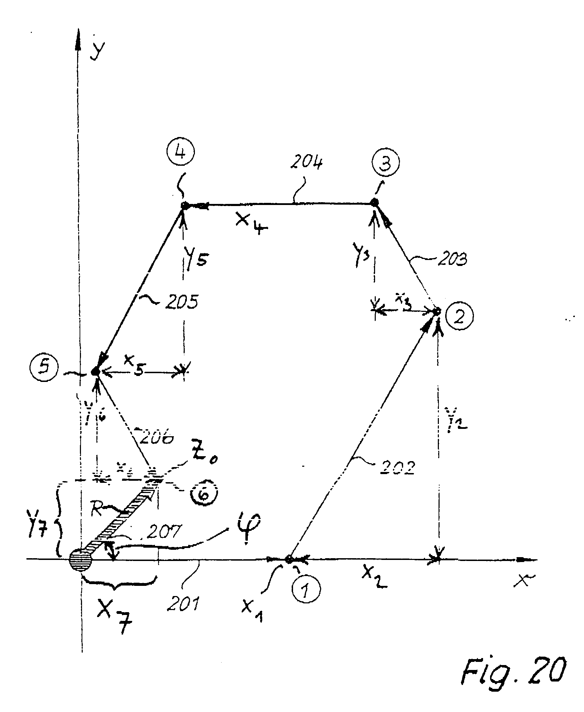

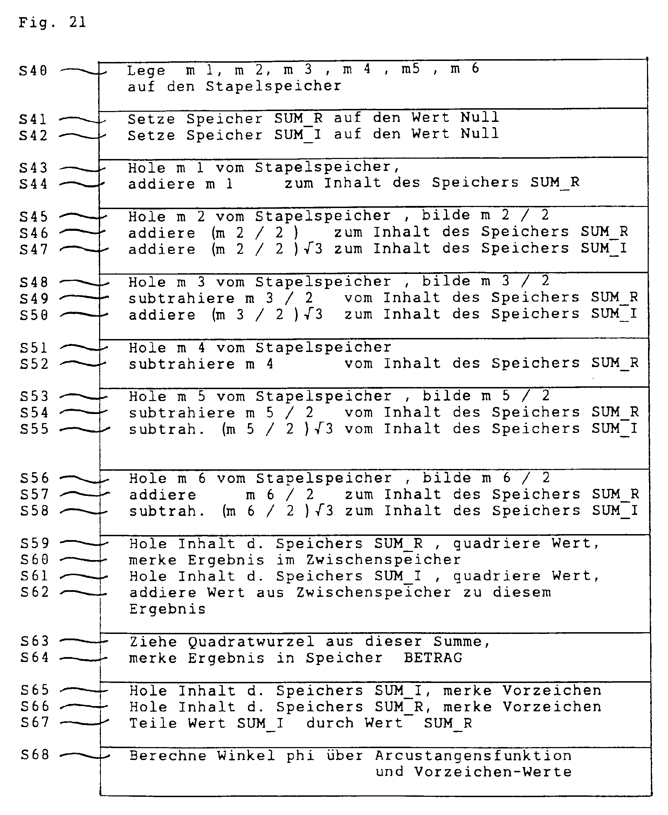

Figur 19D zeigt zusammen mit Fig. 20 ein entsprechendes Beispiel zur Auswertung von z. B. drei oder sechs Statorspulen, für die sechs Werte m1 bis m6 ermittelt wurden gemäß Vorgehensweisen, wie sie in Fig.

12 und Fig. 13 dargestellt sind. Wie bereits erläutert, gilt m1=M1, m2=M21, m3=M31 etc.

Fig. 19D zeigt die "Komplexe Ebene", wobei der x-Achse dem Realteil und der y-Achse dem Imaginärteil entspricht. Fig. 20 kann ebenfalls als komplexe Ebene aufgefaßt werden.

Außer den Koordinaten der komplexen Ebene sind in Fig. 19D alle sechs Vektoren v1 bis v6 der sechsten Einheitswurzeln eingezeichnet, wobei wie üblich unter Einheitswurzel eine Lösung x verstanden wird, welche die Aufgabenstellung x hoch n = 1 erfüllt.

Die erste Harmonische, das heißt die sinusförmige Grundwelle, die einer vorgegebenen Anzahl von Meßwerten einer periodischen Funktion zugeordnet ist, errechnet sich in Amplitude und Phase durch Addition zugehöriger komplexer Zahlen. Diese Addition wird vergleichbar der Addition von Vektoren vorgenommen und ist für eine sogenannte 6-Punkte DFT (diskrete Fourier-Transformation) in Fig. 20 beispielsweise dargestellt. Sind weniger bzw. mehr Meßwerte (Meßpunkte) vorhanden, so gelten entsprechend abgewandelte Vorgehensweisen, wie sie aus der Theorie der Fourier-Transformationen bekannt sind.

In einem ersten Rechenschritt dieser Vorgehensweise sind zunächst die Meßwerte, die in der Regel als reelle Größen, z. B. als gemessene Stromwerte vorliegen , in die korrekten komplexen Zahlen umzuwandeln.

Dies verdeutlicht Fig. 19D :

Sind z.B. die sechs Werte m1 bis m6 vorhanden, so werden auf dem Einheitskreis in der komplexen Ebene zunächst die sechs sogenannten sechsten Einheitswurzeln v1 , v2 , v3, v4, v5, v6 eingetragen, für die die Gleichung $(v_k) \wedge 6 = 1$ erfüllt ist, wobei k = 1,2,3,4,5,6 . Der in Fig. 19D gezeigte Winkel phi o beträgt 60 °, so daß die genannten Einheitswurzeln auch gemäß der Formel exp( k ∗ i ∗ phi o ) dargestellt werden können, wobei k ein Wert von 1 bis 6 ist. In einem weiteren Schritt wird nun für die sechs Werte m1 - m6 eine lineare Streckung der Einheitswurzeln in sukzessiver Reihenfolge vorgenommenn, und zwar jeweils um den betreffenden Faktor m1 .....m6, so daß man in der komplexen Ebene die Punkte m1 bis m6 der Fig. 19D erhält . Die vom Koordinatenursprung ausgehenden Vektoren bis zu diesen Punkten m1 bis m6 sind auch in Fig. 20 dargestellt, aber in anderer Form.

Unter "Streckung der Einheitswurzeln" wird verstanden, daß diese mit dem betreffenden Wert m1 bis m6 multipliziert werden.

Z. B. ist in Fig. 19D der Wert m1 größer als 1 , und deshalb wird der betreffende Vektor m1 ( vom Betrag her) größer als 1 . Dagegen ist m3 kleiner als 1, und deshalb wird der betreffende Vektor m3 kleiner als 1 .

Die Vektoren m1, m2, m3, m4, m5, m6 werden in Fig. 20 mit den Bezugsziffern 201 bis 206 gekennzeichnet.

Außerdem sind sie in einer kettenartigen Aneinanderreihung zur Darstellung ihrer Vektorsumme gezeichnet.

Zur Verdeutlichung der zugehörigen Rechenvorschrift zur arithmetischen Summierung dieser Vektoren sind noch deren x- und y-Anteile gezeigt und mit x1, x2, y2, x3, y3 etc. gekennzeichnet. Die x-Komponente des resultierenden Vektors wird mit x7 bezeichnet und setzt sich aus den gezeigten x-Anteilen zusammen, während die y-Komponente sich aus den y-Anteilen zusammensetzt und mit y7 bezeichnet wird. - Dieser resultierende Vektor besitzt den Endpunkt Z 0 , welcher wiederum als komplexe Zahl mit dem Realteil x7 und dem Imaginärteil y7 aufgefaßt werden kann. Der Betrag R und die Phase phi dieser komplexen Zahl können nach bekannten Rechenregeln aus Realteil und Imaginärteil ermittelt werden, zum Beispiel ist der Betrag von R gleich der Quadratwurzel aus der Summe der Quadrate von Realteil und Imaginärteil, also

$$\sqrt{(x_7^2 + y_7^2)} \ .$$

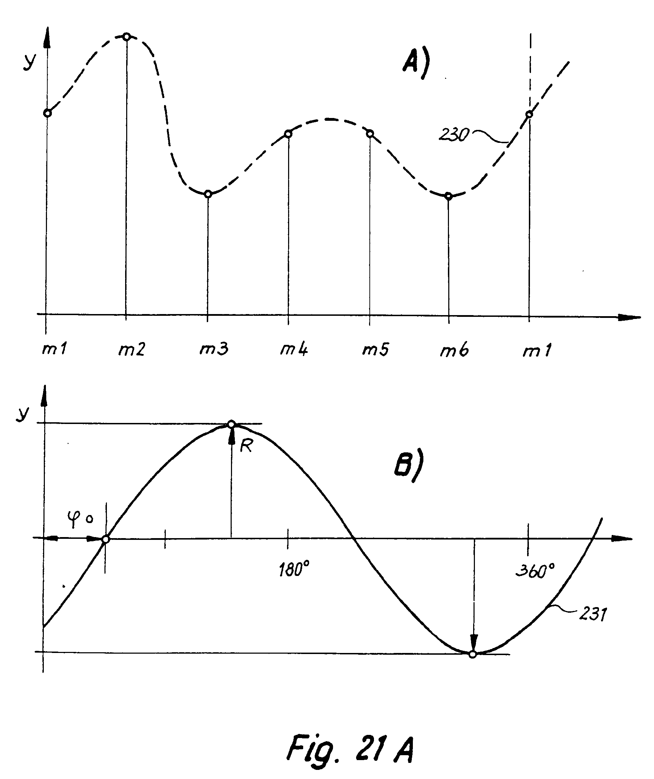

Eine zugehörige Rechenvorschrift für die Bearbeitung der Werte m1 bis m6 durch einen Digitalrechner, beispielsweise einen Mikroprozessor, wird als Flußdiagramm in Fig. 21 angegeben. Wie bei solchen Verfahren üblich, sind viele andere sinngemäße Vorgehensweisen möglich.

In einem ersten Schritt S40 werden die bereits bekannten Werte m1 bis m6, die durch einen anderen Programmteil ermittelt werden, in einem Speicher, z.B. einem Stapelspeicher, abgelegt.

In den folgenden Schritten S41 und S42 werden verschiedene Größen mit Anfangswerten vorbelegt, insbesondere werden die Speicherzellen mit den Zuweisungsadressen SUM_R und SUM_I auf den Wert Null gesetzt. Dies sind die Speicher für Realteil und Imaginärteil.

In den folgenden Schritten S43 bis S58 werden in diese Speicher im wesentlichen Werte hinzuaddiert bzw. abgezogen, die sich von den Werten m1 bis m6 ableiten.

So wird in Schritt S43 und 544 zunächst der Wert m1 vom Stapelspeicher geholt und dann zum Inhalt des Speichers SUM_R addiert, welcher danach den Wert m1 annimmt.

In Schritt S45 wird sodann der Wert m2 vom Stapelspeicher beschafft und durch zwei dividiert. Dieses Ergebnis wird zum einen dem Inhalt des Speichers SUM_R hinzugefügt, zum anderen noch einmal mit dem Faktor √3 multipliziert und dann dem Inhalt des Speichers SUM_I hinzugefügt. Dieses Verfahren wird in ähnlicher Form in den folgenden Schritten weitergeführt, wobei in Schritten S51 und S52 die Division durch den Faktor zwei entfällt und ähnlich wie in Schritten S43 und S44 verfahren wird, wobei allerdings m4 vom Inhalt des Speichers SUM_R subtrahiert werden muß. In den anderen Fällen ist jeweils zunächst eine Division durch zwei erforderlich, um Zwischenergebnisse zu erhalten, die dem Speicher SUM_R additiv oder subtraktiv hinzugefügt werden bzw. nach Multiplikation mit dem Faktor √3 dem Speicher SUM_I. Diese Auf- bzw. Absummierungen der Speicher SUM_R und SUM_I sind dann mit Schritt S58 abgeschlossen .

Die in den Speichern SUM_R und SUM_I befindlichen Werte repräsentieren somit zum einen die x-Komponente x7 des Vektors R in Fig. 20 und zum anderen die y-Komponente y7 desselben Vektors.

Dementsprechend sind die weiteren Rechenschritte gemäß Fig. 21 dazu bestimmt, den Winkel dieses Vektors gegenüber der x-Achse zu bestimmen und darüberhinaus auch seinen Betrag. Gemäß Schritten S59 bis S64 der Fig. 21 werden für die Betragsermittlung zunächst die Inhalte der Speicher SUM_R und SUM_I einzeln quadriert, sodann aus den Quadraten die Summe gebildet.

Aus dieser Summe wird sodann die Quadratwurzel gezogen, welcher Wert bereits den gesuchten Betrag des Vektors repräsentiert und deswegen in die Speicherzelle BETRAG eingespeichert wird.

Zur Berechnung des Phasenwinkels phi gegenüber der x-Achse wird sodann in Schritten S65 bis S68 zunächst die Inhalte der Speicher SUM_R UND SUM_I beschafft und die jeweiligen Vorzeichen dieser Werte gemerkt. Gemäß bekannten trigonometrischen Vorgehensweisen errechnet sich der gesuchte Winkelhauptwert phi o aus dem Quotienten aus SUM_I / SUM_R und der hierauf angewendeten Arcustangensfunktion. Der endgültige Winkelwert wird dann gemäß bekannten Umformungen aufgrund der gespeicherten Vorzeichenwerte innerhalb eines Intervalls von 0 ° bis 360 ° bestimmt.

Der hier beschriebene Sachverhalt kann ebenfalls abgekürzt durch die Summationsformel

$$Z_o = \Sigma\, m_k * \exp ( i * k * phi_o )$$

beschrieben werden, und die Summe $Z_o$ gibt daher durch ihren Realteil und ihren Imaginärteil ebenfalls Betrag und Phase der ersten Harmonischen bzw. der Grundwelle an, also der Grundwelle einer durch die Meßwerte m1 bis m6 definierten periodischen Funktion.

Das zuletzt beschriebene Verfahren kann mit Rechengängen und Verfahren der Diskreten Fouriertransformation (DFT) verglichen werden.

Dies wird an Fig. 21A erläutert, wo bei A) die Werte m1 bis m6 als 6 Stützwerte einer periodischen Funktion 230 dargestellt sind, die sich anschließend wiederholt.

Der Vergleich zeigt, daß das zuletzt beschriebene Verfahren als DFT zur Bestimmung von Betrag R und Phase phi o der ersten Harmonischen dieser Funktion 230 angesehen werden kann, welche ebenfalls durch äquidistanten Stützwerte definiert ist und welche sich außerhalb der Stützwerte periodisch, d.h. in gleicher Form fortsetzt bzw. wiederholt.

Fig. 21A zeigt dann bei B) die ermittelte erste Harmonische mit ihrer Amplitude R und ihrem Phasenwinkel phi o , der im wesentlichen die Rotorstellung angibt und z.B. gemäß dem Flußdiagramm nach Fig. 21 errechnet wird.

Wie bereits erwähnt, ist im wesentlichen der in Fig. 20 und 21A graphisch dargestellte und gemäß Fig. 21 berechenbare Winkel bzw. Phase phi dieser ersten Harmonischen von Interesse und stellt bereits den gesuchten Positionskennwert für die Rotor- oder Läuferposition des Motors dar.

Es versteht sich, daß anstelle des ausgeführten Beispiels auch ähnliche Rechengänge benutzt werden können, wie sie aus der Theorie der Fourier-Transformationen und allgemein der Integraltransformationen bekannt sind. Insbesondere kann bei einer höheren Anzahl von Stützstellen natürlich auch ein verwandter Algorithmus benutzt werden, der unter dem Namen Fast Fourier-Transformation (FFT) bekannt ist und geeignet ist, weiteren Rechenaufwand einzusparen. Je nach Verfahren können einschränkende Bedingungen zu beachten sein, die dem Fachmann auf diesem Gebiet jedoch geläufig sind.

Vergleicht man die beschriebenen Verfahren zur Bestimmung der gesuchten Phasenlage einer Funktion, so wird ersichtlich, daß die Verfahren auf Basis von Integraltransformationen oder auf Basis von Schwerpunktsanalysen sich durch eine beträchtliche Einsparung an Rechenzeit auszeichnen.

Für eine einfache Bestimmung der Lage eines Rotors oder Läufers wird der Betrag von R ( Fig. 20 bzw. S64 , Fig. 21 ) nicht benötigt.

Eine Kontrolle dieses Wertes auf Überschreitung von vorher festgesetzten oberen und unteren Grenzwerten kann jedoch zur Prüfung dienen, ob ein insgesamt plausibles Rechenergebnis für die Bestimmung des Winkels phi vorliegt oder ob ein Fehlereinfluß irgendwelcher Art vermutet werden muß. Sofern kein Fehlereinfluß zu befürchten ist, kann der Betrag auch noch zur Korrektur bei der Bestimmung der Position des Rotors herangezogen werden, wie im folgenden erläutert.

Für die präzise Positionsbestimmung des Rotors oder Läufers mit relativen Fehlern im Prozent-Bereich ist ein im wesentlichen linearer Zusammenhang zwischen tatsächlichem Winkel bzw. Position des Rotors oder Läufers und dem errechneten Winkel bzw. Positionswert erforderlich.

Da die Messung vom Prinzip her auf nichtlinearen physikalischen Effekten basiert, sind die zunächst erzielbaren Ergebnisse gewöhnlich nicht linear und können zunächst nur als Positionskennwerte bezeichnet werden. Gemäß dem erfindungsmäßigen Gedanken ist es von Vorteil, anhand einer vorab in einem Experiment bestimmter Tabelle Korrekturwerte zu verwerten.

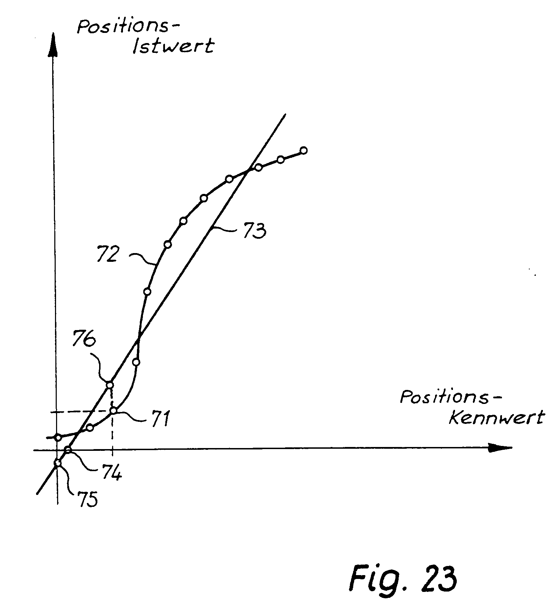

Diese Werte können auch in ein Diagramm eingetragen werden, wie das Figur 23 zeigt.

Diese zeigt im einzelnen die kartesischen Koordinaten "Positions-Istwert" und "Positions-Kennwert".

Die funktionale Zuordnung der Ist- und Kennwerte wird durch die Zuordnungskurve 72 gegeben, wie am Beispiel der Abszissen- und Ordinatenwerte von Funktionswert 71 gezeigt.

Die Zuordnungskurve 72 wird im allgemeinen keinen geradlinigen Verlauf besitzen und unterscheidet sich damit von einer Geraden 73 mit bestem Angleich an die Funktionswerte. Die Abweichungen einzelner Stützwerte der Funktion 72, dargestellt am Beispiel der Strecke 71 - 76, können in einer Korrektur-Tabelle festgehalten werden. Durch eine Anzahl von Stützwerten wird gemäß bekannten mathematischen Verfahren eine oder mehrere angleichende Geraden impliziert.

Zur Definition einer angleichenden Geraden 73, die nicht notwendigerweise durch besten Angleich an die Stützwerte gekennzeichnet sein muß, genügen bekanntlich die Koordinatenschnittpunkte 74 und 75.

Für jeden Positionswert, der nach einem der bereits genannten Verfahren ermittelt worden ist, kann dann unter Verwendung einer solchen Korrektur-Tabelle und üblicher Interpolationsverfahren ein Positions-Istwert errechnet werden.

Für verschiedene Motortypen kann anstelle einer Korrekturtabelle auch eine Korrektur-Formel angegeben werden, die durch eine oder mehrere Sinusterme und ggf. zugehöriger Phasen-Terme definiert ist.

In der Praxis können maximale Korrekturwerte im Bereich einiger bis einiger zehn Grad (el.) auftreten. Einen typischen Wert stellt eine sinusförmig variierende Abweichung dar, die im Maximum ca. 20 ° el. annimmt und mittels der genannten Korrekturrechnung etwa um einen Faktor 10 reduziert werden kann.

In einer weiteren Verfeinerung der Korrekturmaßnahmen können natürlich auch weitere Parameter in die Berechnungen eingefügt werden, wie z.B. Temperaturwerte der Motorspulen oder des Magneten.

Zusätzliche Korrekturinformation kann aus den im vorhergehenden nicht weiter betrachteten höheren Harmonischen der jeweils zugrundegelegten Meßwertfolgen ermittelt werden, sofern entsprechend viele Meßpunkte zur Verfügung stehen.

Desgleichen kann aus der Amplitude der ersten Harmonischen eine weitere Korrekturfunktion dieser Art abgeleitet werden. Für diese Vorgehensweise wird eine zusätzliche Korrekturfunktion oder -Tabelle benötigt, und die gesuchte Rotorposition berechnet sich sodann aus dem Winkel phi ( Fig. 20) und einem additiven oder multiplikativen Korrekturwert, der direkt von dem Betrag (Amplitude) der ersten Harmonischen abhängt. Korrekturfunktion- oder -Tabelle sind durch ein Experiment festzulegen, welches im Vorwege ausgeführt wird.

Kommutierungs-Strategie für sensorlosen Motor :

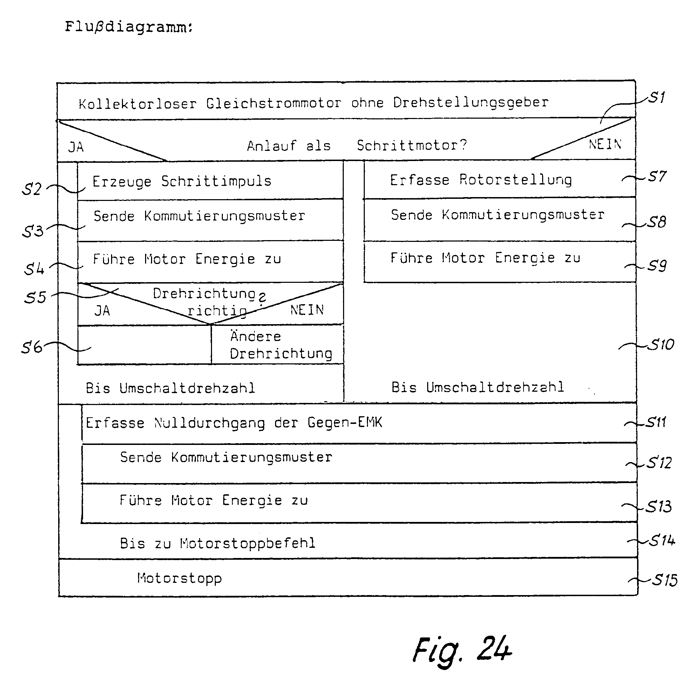

Die Entscheidungssequenz, wann die Kommutierung des Motors durchzuführen ist, wird durch das Flußdiagramm Fig. 24 verdeutlicht.

Zum einen ist zunächst festzulegen, ob ein Anlauf als Schrittmotor zulässig ist oder nicht, da das Einlaufen in eine Grundposition möglicherweise durch eine nicht zulässige Drehrichtung erfolgen kann. ( Fig. 24, S1 ) Ist Schrittmotorbetrieb zulässig, so wird z.B. ein Schrittimpuls ausgeführt ( Fig. 24, S2), der den Zähler 1003 (Fig.2) incrementiert. Im Schritt S3 erzeugt die Kommutierungslogik 1002 ein neues Kommutierungsmuster, welches an die Endstufeneinheit 26 geschickt wird, welche in einem Schritt S4 für die Energetisierung des Motors sorgt. Im folgenden Schritt S5 wird sodann durch EMK-Beobachtung festgestellt, ob die Drehrichtung korrekt ist. Sofern dies der Fall ist, kann in Schritt S6 die Drehrichtung beibehalten werden, anderenfalls ist dann für Kommutierungssequenzen zu sorgen, die einen Wechsel der Drehrichtung bewirken. - Diese Sequenz wird zunächst solange wiederholt, bis ein erstes Drehzahllimit erreicht ist.

Ist alternativ der Anlauf des Motors sofort in korrekter Drehrichtung erforderlich, werden Schritte S7 bis S9 ausgeführt. Durch die im Schritt S7 erfaßte Rotorstellung kann nämlich, wie das beim regulären Betrieb eines kollektorlosen Gleichstrommotors ebenfalls der Fall ist, in einem Schritt S8 sogleich das erforderliche Kommutierungsmuster generiert und gesendet werden, welches den Motor in die richtige Drehung während des Schrittes S9 versetzt. Im Schritt S10 wird entschieden, ob dies Verfahren wiederholt werden muß oder ob ein Drehzahl-Limit erreicht worden ist.

Nach Erreichen dieses ersten Drehzahl-Limits wird durch die Schritte S11 bis S14 für eine weitergehende Motorbeschleunigung gesorgt.

Dies wird dadurch erreicht, daß nach Erkennen der Nulldurchgänge der Motor-Gegen-EMK zu einem geeigneten Zeitpunkt gemäß einem neuberechneten Kommutierungsmuster dem Motor Energie zugeführt wird.

Auf diese Weise wird ein Hochlaufen des Motors bis zu einer maximal erreichbaren Drehzahl bewirkt.

16

Regelung und Steuerung von Motor-Geschwindigkeit oder -Position mit erfindungsgemäßen Verfahren :

Die genaue Positionsbestimmung eines Rotors oder Läufers unter Benutzung des erfindungsgemäßen Verfahrens kann in der Praxis mit genügend hoher Wiederholfrequenz, z.B. 100 mal pro Sekunde ausgeführt werden, um Abweichungen von einer Soll-Position des Motor-Rotors zu registrieren und durch aktive Gegenwirkung möglichst gering zu halten. (Regelungsprinzip)

Da die Positionswerte nur zu diskreten Zeitpunkten erfaßt werden können, kann es sich bei dieser Regelung auch nur um eine Abtast-Regelung handeln. Zu diesem Sachgebiet sind umfangreiche eigenständige Publikationen bekannt.

Bekanntlich wird für Abtastregelungen die erreichbare Regelgüte durch die Abtastzeit als auch die verschiedenen System-Zeitkonstanten beeinflußt, ferner durch den angewendeten Regelalgorithmus .

Es ist daher ein weiterer Gegenstand der Erfindung, die Positionsbestimmung des Rotors gemäß einem der genannten Verfahren dazu zu nutzen, um entweder eine Geschwindigkeits- oder eine Positionsregelung des Rotors/Läufers durchzuführen. Hierzu kann vorzugsweise eine Reglerstruktur mit PID-Algorithmus oder auch mit einem Zustandsregler-Algorithmus verwendet werden.

Anstelle einer Regelung kann natürlich auch eine Steuerung ausgeführt werden.
Hierbei wird durch ein Programm oder eine externe Vorgabe der Verlauf der Geschwindigkeit oder die Reihenfolge der Positionen vorgegeben, die der Motor-Rotor in Abhängigkeit von der Zeit einnehmen soll.

Ein weiteres erfindungsgemäßes Verfahren für die Geschwindigkeitssteuerung besteht darin, nur eine Positionsmessung des Rotors durchzuführen und danach nur noch Bestromungs-Schritte auszuführen.

Die Dauer der Bestromungsschritte wird in der Regel davon abhängen, wann die nächste Motor-Kommutierung vorzunehmen ist und wird sich bei Beschleunigung des Motors ständig verkürzen.

Gemäß dem erfindungsmäßigen Gedanken ist es ein vorteilhaftes Verfahren, bei der Berechnung der erforderlichen Impulsverkürzung die Zahl der bereits ausgeführten Bestromungs-Zyklen zu berücksichtigen. In der Regel werden mit steigender Geschwindigkeit des Rotors die Impulse verkürzt werden.

Anstelle der Abhängigkeit der Impulsverkürzung von einer Anzahl Bestromungsimpulsen als implizitem Maße der Zeit kann die genannte Abhängigkeit auch linear und explizit von der Zeit abhängen.

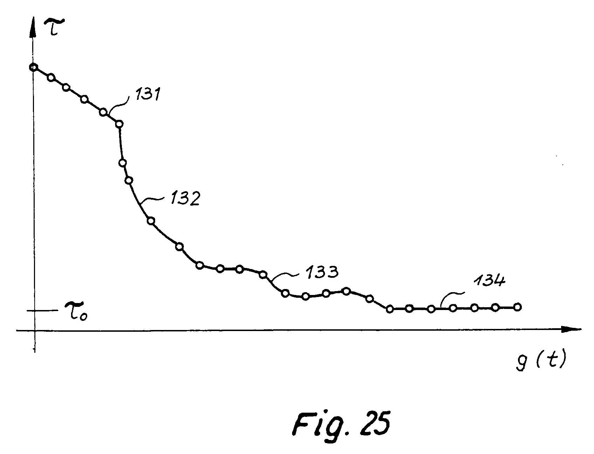

Gemäß Fig. 25 besteht eine andere Möglichkeit erfindungsgemäß darin, die Bestromungs-Perioden-Dauer in linearer Weise von dem erreichten Gesamtwinkel bzw. der erreichten Position abhängig zu machen, zum Beispiel ( beginnend mit einem relativ großen Startwert für die Bestromungszeit) nach Maßgabe der bereits erreichten Position die Bestromungszeit kontinuierlich und linear (131) zu reduzieren, bis zum Beispiel ein Minimalwert erreicht wird, der nicht mehr unterschritten wird.

Ebenso ist es möglich, die genannten Vorgehensweisen in nichtlinearer Form auszuführen .
Dies kann insbesondere in Form einer logarithmischen oder einer hyperbelförmigen Abhängigkeit (132) verwirklicht werden, bei Bedarf kann auch ein Verlauf gemäß komplizierteren funktionalen Abhängigkeiten verwirklicht werden.

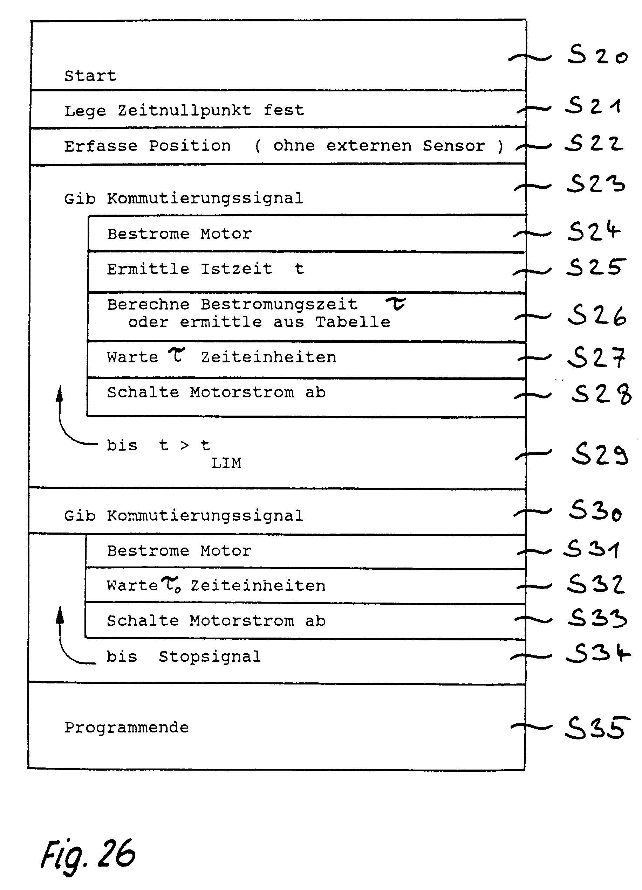

Je nach Motortyp und angekoppelter Last, insbesondere bei federnd angekoppelter Last, kann es von Vorteil sein, die Bestromungszeit ( tau ) gemäß einer tabulierten Abhängigkeit zu reduzieren ( Fig. 25, 133 ), d.h. die erforderlichen Bestromungszeiten werden nicht mehr aufgrund eines mathematischen Ausdrucks berechnet, sondern sind in tabellenartiger Form z.B. in einem Speicherbaustein hinterlegt. Mit fortschreitendem Rotorwinkel bzw. mit fortschreitender Zeit wird jeweils neue Bestromungsdauer-Information aus dem Speicherbaustein beschafft. Dies Verfahren wird ebenfalls solange ausgeführt, bis eine minimale Bestromungszeit erreicht ist, welche konstant gehalten wird, sodaß sich Zugriffe auf den Speicherbaustein erübrigen ( Fig. 25, Wert 134 ).
Das vorstehend beschriebene Verfahren wird in Form eines Struktogrammes durch Fig. 26 gezeigt.

Beginnend mit einem Startschritt S20, in dem insbesondere eine initiale Zuweisung von Anfangswerten an variable Speicherwerte erfolgt, wird danach im Schritt S21 ein Zeitzähler auf null gesetzt, der danach von alleine quasikontinuierlich, d.h. mit vorgegebener kurzer Zykluszeit, seinen Zählerstand periodisch incrementiert.

Mithilfe der im vorhergehenden beschriebenen Methoden wird im darauf folgenden Schritt S22 ohne Zuhilfenahme von externen Sensoren zumindest die elektrische Position bestimmt. Die darauf folgenden Schritte betreffen die Hochlaufphase, bei der die kinetische Energie des Motors ständig zunimmt. In Abhängigkeit vom bereits erfaßten Positionswert wird in Schritt S23 ein geeignetes Kommutierungssignal generiert, welches in Schritt S24 zur Bestromung des Motors herangezogen wird derart, daß eine Beschleunigung des Rotors in gewünschter Richtung stattfindet. Der Strom wird jedoch zunächst nicht unterbrochen.

Unmittelbar darauf wird in Schritt S25 die aktuelle Istzeit t ermittelt, anhand derer im nächsten Schritt S26 die vorgesehene Bestromungszeit tau nach einer vorgegebenen Berechnungsvorschrift oder nach einer vorgegebenen, im Prozessor gespeicherten Tabelle ermittelt wird.
Im nächsten Schritt S27 wird solange gewartet, bis die in Schritt S26 ermittelte Bestromungszeit verstrichen

17

EP 0 536 113 B1

ist, sodaß darauf im Schritt S28 der Motorstrom zunächst abgeschaltet werden kann.

Da die Beschleunigungsphase nur eine gewisse Zeit dauert, wird in Schritt S29 geprüft, ob die vorgesehene Beschleunigungszeit t LIM bereits überschritten ist oder nicht. Ist dies nicht der Fall, wird erneut mit Schritt S23 fortgefahren usw.

Ist jedoch die Zeit t LIM überschritten, so verzweigt das Programm in die Konstantgeschwindigkeitsphase und gibt in Schritt S30 zunächst ein weiteres Kommutierungssignal. Auf diesen Schritt schließt sich Schritt S31 an, der aufgrund des generierten Kommutierungssignals die zugeordnete korrekte Bestromung des Motors besorgt.

Im folgenden Schritt S32 wird wie in Schritt S27 abgewartet, wann der Motorstrom vorübergehend wieder abgeschaltet werden soll, was nach einer Zeit entsprechend tau o Zeiteinheiten der Fall ist, wobei die konstante Größe tau o dem Prozessor bekannt ist.

Die vorübergehende Abschaltung erfolgt sodann in Schritt S33. In dem darauf folgenden Schritt S34 wird geprüft, ob durch irgendeine Bedingung ein Stopsignal generiert wurde.

Ist dies nicht der Fall, so wird wiederholt zu Schritt S30 verzweigt, in dem ein neues Kommutierungssignal gegeben wird etc.

Im anderen Fall, bei Vorliegen eines Stopsignales, wird jedoch zum Programmende, Schritt S35, verzweigt.

Es wird kein weiterer Motorstrom zugeführt, der Motor kommt zum Stillstand.

Im Falle der Geschwindigkeitssteuerung ist es ferner möglich, zwangsweise einen Wechsel der Positionsbestimmungsart von statischer, d.h. bei niedrigen Drehzahlen und per Ermittlung der Phasenlage einer Grundwelle, auf dynamische Weise mittels Gegen-EMK vorzunehmen bzw. umgekehrt.

Dieser Wechsel kann erfindungsgemäß direkt nach einer bestimmten Zahl von Bestromungszyklen erfolgen.

Voraussetzung für diese zuletzt genannten Betriebsweisen ist natürlich, daß hinreichend bekannte und reproduzierbare Reibungsverhältnisse und Trägheitsmomente des Motors und der von ihm angetriebenen Geräte vorliegen, so daß es zu keinem verfrühten Wechsel kommen kann und die dynamische Positionsbestimmungsart fehlerfrei arbeiten kann.

Weitere Anwendungsbereiche :

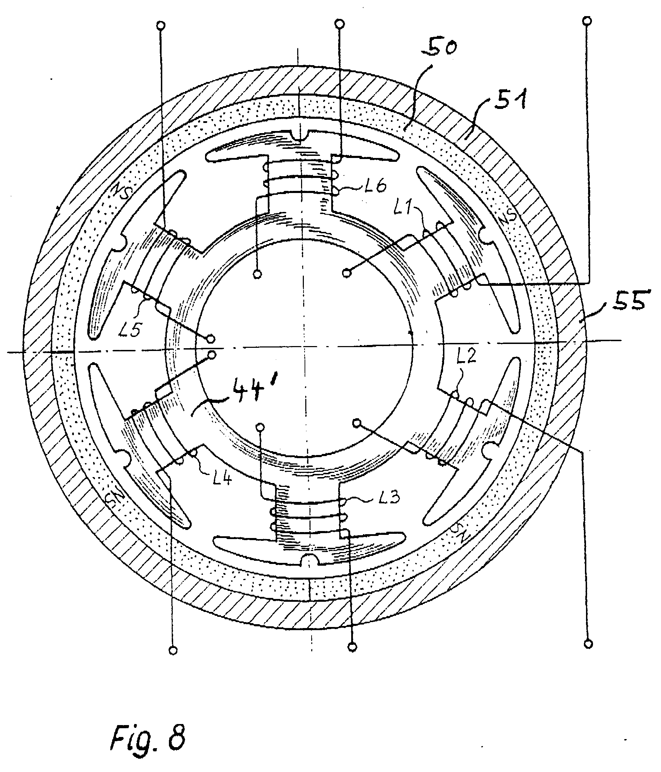

Die Anwendung der Erfindung ist nicht auf standardmäßige kollektorlose Gleichstrommotoren beschränkt, wie sie vorzugsweise mit 4 oder 8 Magnetpolen und mit z.B. 6 oder 12 Spulen zum Einsatz kommen ( Fig. 8 , Fig. 9, Fig. 10 ).

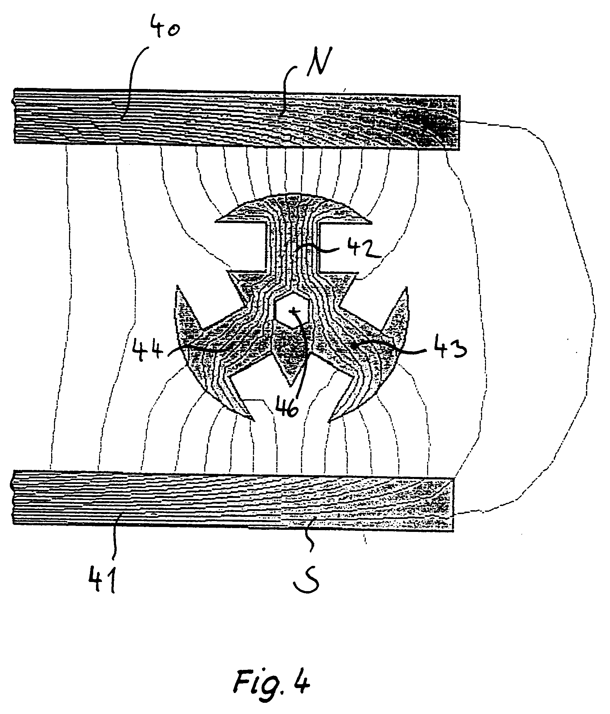

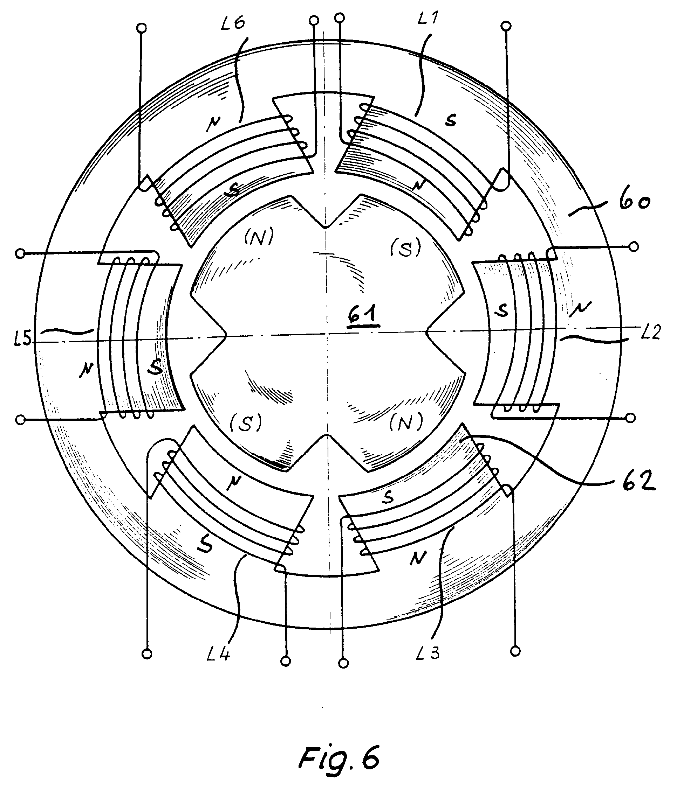

Vielmehr können die erfindungsmäßigen Ausführungsformen sich auch erstrecken auf alle Motoren, deren Induktivität sich positionsabhängig ändert, z.B. einfache Motoren mit sog. 3-T-Ankern ( Fig. 4, 5 und 7 ), insbesondere natürlich alle Arten von Reluktanzmotoren mit oder ohne Permanentmagneten ( Fig. 6 ).

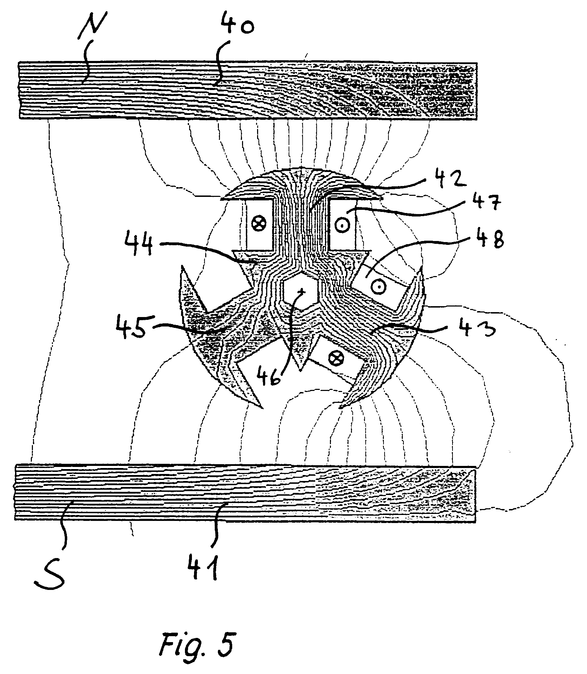

Die magnetischen Verhältnisse werden insbesondere in Fig. 4 und 5 wiedergegeben. Fig. 4 zeigt zunächst einen konventionellen sog. 3-T-Anker 44, der sich im Magnetfeld eines Permanentmagnetpolpaares mit Nordpol 40 und Südpol 41 befindet und um das Zentrum 46 drehbar gelagert ist.

Bereits im stromlosen Fall (Fig. 4) ist Schenkel 42, der dem Nordpol 40 näher steht als die Schenkel 43 und 44 dem Südpol 41, einer höheren magn. Flußdichte ausgesetzt ( 10 gezeichnete Flußlinien) als die beiden anderen Schenkel ( ca. 5 gezeichnete Flußlinien ). Es ist ersichtlich, daß eine Spule 47, wie sie in Fig. 5 gezeigt wird, die Magnetisierung des Schenkels 42 bei passender Bestromung verstärkt und einen Eisenanteil dieses Schenkels mit weniger Strom in Sättigung bringen kann, als wenn noch keine Vormagnetisierung durch den Permanentmagneten 40, 41 vorliegen würde bzw. nur schwach vorliegt, wie das bei Fig. 5 im Schenkel 43 der Fall ist.

Dementsprechend wird jedoch eine höhere Bestromung einer solchen Spule 47 erforderlich, um eine magnetische Sättigung dieses Schenkels 42 im entgegengesetzten Sinne zu erreichen. Da Bestromungsvorgänge dieser Art aufgrund der jeweils vorhandenen Anfangsinduktivität mit einer ersten Zeitkonstanten behaftet sind, wird der Zeitbedarf für Magnetisierung bis zur Sättigung mit einer gewünschten Polarität unterschiedlich ausfallen. Ähnliche Betrachtungen gelten für den Fall, daß eine Serienschaltung von Spule 47 mit Spule 48 bestromt wird.

Je nach Polarität des Stroms wird insbesondere Schenkel 42 entweder schnell oder langsamer in Sättigung gebracht, was sich ebenfalls in einer Änderung der effektiven Induktivität dieser Spule äußert. Es ist ersichtlich, daß sich diese Effekte je nach Winkelstellung des Ankers 44 unterschiedlich auswirken , sich aber gemäß der Rotationssymmetrie des Ankers nach einer Umdrehung von 120 ° mech. sinngemäß für die nächste Spule wiederholen.

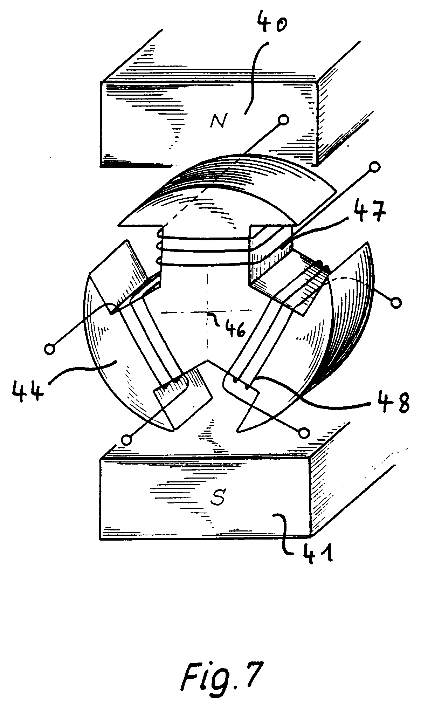

Eine einfache räumliche Anordnung eines solchen 3T-Anker-Motors zeigt Fig. 7. Die Kontaktierung der Spulen 47 und 48 kann bei feststehendem Anker 44 und umlaufenden Magneten 40, 41 direkt vorgenommen werden. Bei feststehenden Magneten und umlaufendem Anker sind die Spulen zweckmäßig über Schleifringe

18

EP 0 536 113 B1

( in Fig. 7 nicht gezeichnet ) zu bestromen.

Eine ähnliche Wirkung kann mit der Anordnung nach Fig. 6 ( Reluktanzmotor ) erzielt werden. Ein Stator 60 aus Dynamoeisen mit sechs ausgeprägten Statorpolen 62 wirkt auf einen beweglichen Rotor 61, der ebenfalls vollständig aus Eisen bestehen kann.

Auf den Statorpolen 62 befiden sich besitzen zugehörige Spulen L1 bis L6, die individuell mit Gleichspannung beliebiger Polarität beschaltet werden können. Da der Rotor 61 zunächst unmagnetisch ist, können vergleichbare Verhältnisse wie in Fig. 4 dadurch hergestellt werden, daß die Spulen L1 und L4 so geschaltet werden, daß die gezeichneten Südpole des Rotors 61 hervorgerufen werden. Die gleichzeitig entstehenden Nordpole des Rotors stehen dann den durch den gleichen Magnetisierungsvorgang erzeugten Südpolen diejenigen Statorpole gegenüber, auf denen sich die die Spulen L2 und L3 bzw. L5 und L6 befinden.

Die Eisenkerne dieser Spulen sind damit also auch vormagnetisiert und beeinflussen damit den Stromverlauf durch diese Spulen, wenn zum Zwecke der Positionsmessung durch diese kurze Testimpulse gegeben werden. Solche Testimpulse können natürlich insbesondere von unterschiedlicher elektrischer Polarität sein, und es können auch Spulenkombinationen als Vormagnetisierungs-Einrichtungen verwendet werden, insbesondere in Serien- und Parallelschaltung.

Eine ähnliche Konfiguration wie in Fig. 7 wird in Fig. 8 dargestellt, bei der ein feststehender Anker 44' jedoch die doppelte Anzahl an Statorpolen besitzt, welche mit zugehörigen Spulen L1 bis L6 versehen sind .

Auch die Zahl der Permanentmagnetpole des Rotors 55 ist bei Fig. 8 verdoppelt, und die Permanentmagnetpole des Magneten 50 schließen unterbrechungsfrei aneinander an.

Dieser Magnet wird von einem Eisenrückschluß 51 gehalten, der gleichzeitig für eine Verbesserung des magnetischen Kreises sorgt.

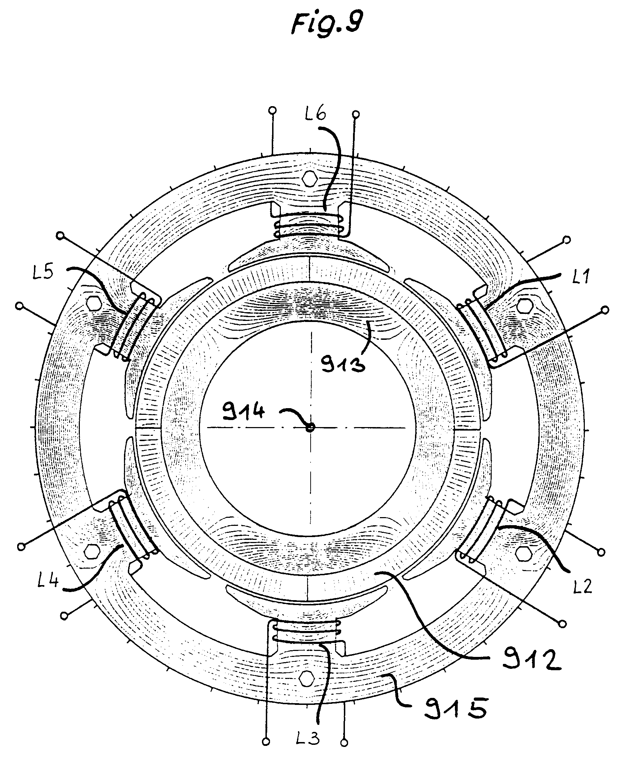

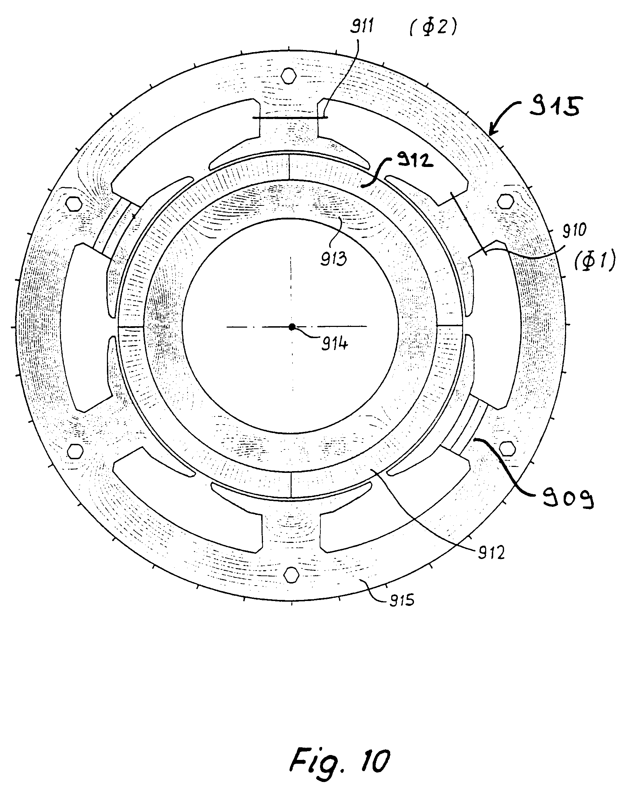

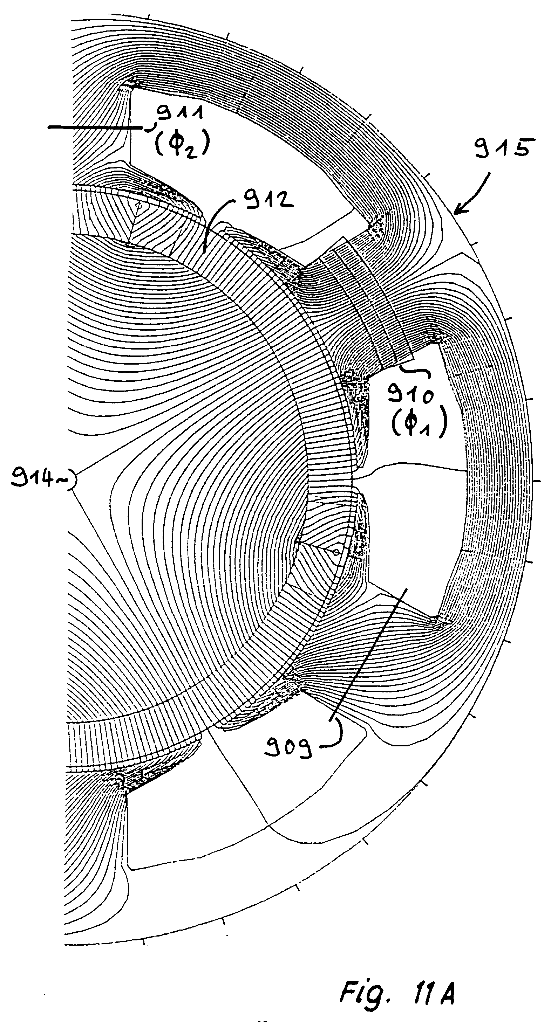

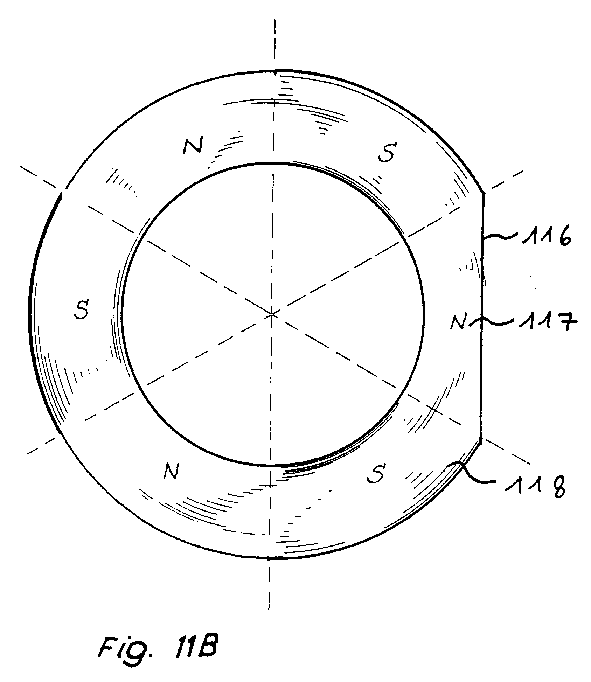

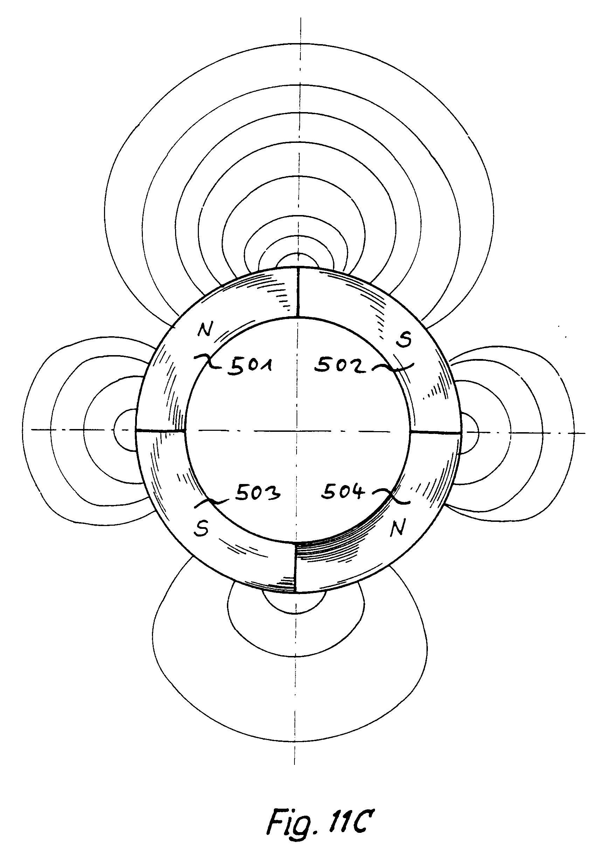

Eine vergleichbare Anordnung mit umlaufenden, jedoch innenliegenden Magneten (Innenrotor) zeigen Fig. 9 und 10. Diese Figuren verdeutlichen zusätzlich die magnetischen Verhältnisse beim Leerlauf des Motors. Der Stator 915 besitzt ebenfalls sechs ausgeprägte Pole mit jeweils zugehörigen Spulen L1 bis L6. Die Magneten 912 des Rotors befinden sich auf einem Eisenrückschluß 913 und können um das Zentrum 914 rotieren.

Die Statorpole mit den Spulen L1, L2, L4 und L5 erfassen den vollen magnetischen Fluß der Permanentmagneten 912. Sie können demgemäß durch zusätzliche Bestromung dieser Spulen einfacher in Sättigung gebracht werden, als dies bei Bestromung der Spule L3 oder der Spule L6 in der gezeigten Stellung des Rotors möglich ist.

Dies wird durch Schnittlinien 910 und 911 in Fig. 10 verdeutlicht. Wie man sieht, wird der magnetische Fluß Phi 1 durch eine größere Anzahl an magn. Flußlinien repräsentiert, welche die Schnittlinie 910 überqueren, während an der Schnittlinie 911 kein nennenswerter magnetischer Fluß ( Phi 2 ) vorhanden ist. Natürlich sind auch diese Verhältnisse abhängig von der Winkelposition des Rotors, dies zeigt Fig. 11 A, wo der Rotor gegenüber Fig. 10 um wenige Grad im Uhrzeigersinn weitergedreht dargestellt ist.

Während der Fluß durch Schnittlinie 910 sich nicht nennenswert verändert hat , hat sich der Fluß durch Schnittlinie 909 bereits deutlich reduziert. Die zugehörige Spule L2 (Fig. 9) muß daher ebenfalls höher bestromt werden, um magnetische Sättigung in diesem Statorpol zu erreichen.

Eine entsprechende Ausführungsform eines Rotors mit vier Magnetpolen 501 bis 504 zeigt Fig. 11 C.

Pole 501 und 502 sind stärker magnetisiert als Pole 503 und 504. Diejenigen Statorpole, die den Magnetpolen 501 und 502 gegenüberstehen, erhalten demgemäß eine höhere Vormagnetisierung und können daher leichter, d.h. mit weniger Strom, in die magnetische Sättigung gebracht werden.

Muß die genannte Vormagnetisierung jedoch durch entgegenwirkende Bestromung überwunden werden, so ist natürlich höherer Strom aufzuwenden als bei denjenigen Statorpolen, die den Permanentmagnetpolen 503 und 504 gegenüberstehen.

Durch diese Asymmetrie in der Magnetisierung, die eine Periodizität über 360 ° aufweist, kann daher eindeutig auf die Rotorposition über den gesamten mechanischen Vollwinkel von 360 ° geschlossen werden.

Eine Oberflächenstruktur des rotierenden Permanentmagneten, wie sie in Fig. 11 B gezeigt wird, besitzt an einer oder einigen Polen, z.B. Nordpol 117 , eine zurückgenommene Oberfläche 116 .

Durch diese geometrische Asymmetrie wird ebenfalls eine Asymmetrie im Magnetfluß erzeugt, sodaß aufgrund dieser Asymmetrie eine eindeutige Bestimmung der Rotorposition über den gesamten mechanischen Vollwinkel gelingt.

Einen ähnlichen Sachverhalt zeigt Fig. 11 D.

Der Permanentmagnet mit Nordpol 1123 und Südpol 1124 ist um das Zentrum 1127 drehbar gelagert und steht den Statorpolen 1126 des Stators 1125 gegenüber. Luftspalt 1122 ist größer als Luftspalt 1121 und weitere, nicht gezeigte Luftspalte. Ebenso wie im vorhergehend beschriebenen Fall wird auf diese Weise eine mechanisch/magnetische Asymmetrie erzeugt, die eine eindeutige Bestimmung der Rotorposition über den gesamten mechanischen Vollwinkel gestattet.

EP 0 536 113 B1

**Patentansprüche**

1. Motor oder Lagemelder, insbesondere kollektorloser Gleichstrommotor, mit einem mit mindestens einer Wicklung versehenen magnetischen Kreis und mit einem Rotor oder Läufer, dessen Drehstellung oder Position laufend erfaßt wird , wobei die Drehstellung des Rotors oder die Position des Läufers aus drehstellungsabhängigen oder positionsabhängigen elektrischen Motorwerten mittels Rechenoperationen fortlaufend bestimmt wird, dadurch gekennzeichnet, daß der Motor oder Lagemelder Einrichtungen enthält, die die Drehstellung des Rotors oder die Position des Läufers durch vektorielle Rechenoperationen und oder durch Rechenoperationen für komplexwertige Größen und oder durch eine Integraltransformation und oder durch eine Rechenmethode zur Bestimmung kleinster Quadratsummen oder kleinster Absolutbeträge und oder durch ein Rechenverfahren zur Bestimmung von Schwerpunktskoordinaten mindestens angenähert bestimmen.

2. Motor oder Lagemelder nach Anspruch 1, dadurch gekennzeichnet, daß als Integraltransformation eine Fourier-Transformation oder Fourier-Analyse verwendet wird.

3. Motor oder Lagemelder nach Anspruch 1 oder 2, dadurch gekennzeichnet, daß als positionssabhängiger elektrischer Motorwert die Induktivität oder Gegeninduktivität von einer oder mehreren Motorwicklungen verwendet wird.

4. Motor oder Lagemelder nach Anspruch 3, dadurch gekennzeichnet, daß die positionsabhängige Induktivität oder Gegeninduktivität mindestens einer Motorwicklung oder Lagemelderwicklung verwendet wird, deren magnetischer Kreis im Verlauf einer Rotordrehung von 360 ° el. mindestens zeitweise in einen Zustand der Sättigung gerät oder sich mindestens zeitweise im Bereich der Sättigung befindet.

5. Motor oder Lagemelder nach einem od. mehreren der vorhergehenden Ansprüche, dadurch gekennzeichnet, daß die Wirkflächen vorhandener Permanentmagnete unterschiedlich hohe oder ungleichförmig verteilte Magnetisierungen aufweisen.

6. Motor oder Lagemelder nach einem od. mehreren der vorhergehenden Ansprüche, dadurch gekennzeichnet, daß mindestens ein magnetischer Flußpfad des Motors durch geeignete Bestromung wenigstens einer Induktivität in den ungesättigten oder weniger gesättigten Zustand übergeführt wird.

7. Motor oder Lagemelder nach einem od. mehreren der vorhergehenden Ansprüche, dadurch gekennzeichnet, daß auf eine oder mehrere Induktivitäten Vorströme zum Erzeugen von Vormagnetisierungs-Zuständen gegeben werden

8. Motor oder Lagemelder nach einem od. mehreren der vorhergehenden Ansprüche, dadurch gekennzeichnet, daß der Stromverlauf durch mindestens eine Induktivität des Motors zu mindestens einem Zeitpunkt ermittelt wird, und daß hieraus der Induktivitätswert dieser mindestens einer Induktivität ermittelt wird.

9. Motor oder Lagemelder nach einem od. mehreren der vorhergehenden Ansprüche, dadurch gekennzeichnet, daß die Induktivitätswerte mindestens zweier Induktivitäten als Funktionen des Rotorwinkels des Rotors ermittelt werden und zu einer gemittelten Induktivitätsfunktion zusammengefaßt werden, und daß anschließend die ermittelte Induktivitätsfunktion in Form einer Referenztabelle in einem Speicherglied abgespeichert wird.

10. Motor oder Lagemelder nach einem od. mehreren der vorhergehenden Ansprüche, dadurch gekennzeichnet, daß in dem Speicherglied wahlweise auch interpolierte Zwischenwerte entweder des gemessenen Induktivitätsverlaufs oder des gemittelten Induktivitätsverlaufs abgespeichert werden .

11. Motor oder Lagemelder nach 10, dadurch gekennzeichnet, daß
zu interpolierende Zwischenwerte mit Hilfe einer Spline-Interpolation ermittelt werden.

12. Motor oder Lagemelder nach Anspruch 10, dadurch gekennzeichnet, daß
zu interpolierende Zwischenwerte mit einer sin-cos-Reihenentwicklung ermittelt werden.

13. Motor oder Lagemelder nach einem od. mehreren der vorhergehenden Ansprüche, dadurch gekennzeichnet, daß
die aufzufindende Rotorstellung durch Suchen der größten Ähnlichkeit von Funktionen ermittelt wird, die zum einen auf den gemessenen Stromimpulsen basieren und zum anderen auf den in einem Speicherglied abgespeicherten Werten basieren .

14. Motor oder Lagemelder nach Anspruch 13,
dadurch gekennzeichnet, daß
die größte Ähnlichkeit von Funktionen durch die Methode der kleinsten Quadrate oder die Methode der kleinsten Absolutbeträge festgestellt wird

15. Motor oder Lagemelder nach einem od. mehreren der vorhergehenden Ansprüche, dadurch gekennzeichnet, daß
die Rotorstellung durch Multiplikation der einzelnen gemessenen Stromwerte mit ihnen zugeordneten geschätzten oder vorbestimmten Richtungskomponenten und anschließende , richtungsorientierte Addition der Produkte ermittelt wird.

16. Motor oder Lagemelder nach Anspruch 15, dadurch gekennzeichnet, daß
die vorbestimmten Richtungskomponenten durch ganzzahlige Winkel bestimmt sind, welche definiert sind durch $360° / n$ , wobei $n = 1,2,3,\ldots$

17. Motor oder Lagemelder nach Anspruch 15, dadurch gekennzeichnet, daß
die richtungsorientierte Addition durch Vektoraddition durchgeführt wird.

18. Motor oder Lagemelder nach Anspruch 15, dadurch gekennzeichnet, daß
die richtungsörientierte Addition durch die separate Addition der Anteile einzelner, voneinander unabhängiger Komponenten $(x_n, y_n)$ durchgeführt wird. ( Fig. 20 )

19. Motor oder Lagemelder nach Anspruch 15, dadurch gekennzeichnet, daß
zur Ermittlung der Rotorstellung nach der richtungsorientierten Addition der Produkte die ermittelte Richtungsgröße ( R ) einer Winkelbestimmung mittels trigonometrischer Funktionen, z.B. der Arcustangensfunktion oder Arcussinusfunktion, unterzogen wird.

20. Motor oder Lagemelder nach Anspruch 15,
dadurch gekennzeichnet, daß
die Richtungskomponenten durch gezieltes Bewegen des Rotors ermittelt und in einem Speicherglied abgespeichert werden.

21. Motor oder Lagemelder nach einem od. mehreren der vorhergehenden Ansprüche, dadurch gekennzeichnet, daß
er entsprechend einer festgestellten Rotorpösitionsoder Rotorgeschwindigkeitsabweichung gegenüber einer Sollposition bzw. Sollgeschwindigkeit bestromt wird gemäß einem PID-Regelalgorithmus oder einem Zustandsregler- Algorithmus.

22. Motor oder Lagemelder nach einem od. mehreren der vorhergehenden Ansprüche, dadurch gekennzeichnet, daß beim Hochlauf des Motors die Periodendauer der Bestromungsimpulse abhängig von der Zahl der Bestromungsimpulse verkürzt wird, insbesondere nach-einer linear verlaufenden Funktion.

23. Motor oder Lagemelder nach einem od. mehreren der Ansprüche 1 bis 21, dadurch gekennzeichnet, daß beim Hochlauf des Motors die Periodendauer abhängig von der Zahl der Bestromungsimpulse verkürzt wird, insbesondere nach einer tabulierten Funktion.

24. Motor oder Lagemelder nach einem od. mehreren der vorhergehenden Ansprüche, dadurch gekennzeichnet, daß beim Hochlauf des Motors nach einer bestimmten Anzahl von Bestromungsimpulsen die Umschaltung auf eine Kommutierungsart erfolgt, welche auf der Auswertung von in Strängen des Motors induzierten Spannungen basiert.

25. Motor oder Lagemelder nach einem od. mehreren der vorhergehenden Ansprüche, dadurch gekennzeichnet, daß ein am Motor oder Lagemelder gemessenes Stromsignal über einen Verstärker , insbesondere einen solchen mit hoher oberer Grenzfrequenz, verstärkt und der verstärkte Wert einer analogen Speicherschaltung zugeführt wird.

26. Motor oder Lagemelder nach einem od. mehreren der vorhergehenden Ansprüche, dadurch gekennzeichnet, daß für die erforderlichen Berechnungen und Bestromungssequenzen ein oder mehrere Prozessoren vorgesehen sind.

27. Motor oder Lagemelder nach einem od. mehreren der vorhergehenden Ansprüche, dadurch gekennzeichnet, daß
zum Ermitteln der Rotorstellung eine Phasenbestimmung für die erste Harmonische (Grundschwingung) einer Funktion verwendet wird, welche Funktion durch eine Mehrzahl von Stützwerten repräsentiert wird, welche Stützwerte aus Strom-, Spannungsoder Induktivitätsmessungen gewonnen werden.

28. Motor oder Lagemelder nach Anspruch 27,
dadurch gekennzeichnet, daß
das Ergebnis der Phasenbestimmung ein direktes oder indirektes Maß für die aufzufindende Rotorstellung darstellt.

29. Motor oder Lagemelder nach Anspruch 27,
dadurch gekennzeichnet, daß zur Phasenbestimmung für die erste Harmonische eine Summe aus mindestens teilweise mehrkomponentigen Summanden gebildet wird und aus den Komponenten der Summe die Phasenlage errechnet wird ( Fig. 21 ).

30. Motor oder Lagemelder nach Anspruch 29,
dadurch gekennzeichnet, daß zur Ermittlung der Phasenlage trigonometrische oder arithmetische Funktionen verwendet werden, wobei die Komponenten der Summe zur Berechnung von trigonometrischen Funktionswerten verwendet werden und als trigonometrische Funktion insbesondere die Arcustangensfunktion verwendet wird.

31. Motor oder Lagemelder nach einem od. mehreren der vorhergehenden Ansprüche, dadurch gekennzeichnet, daß der Betrag ( R) der ersten Harmonischen (Grundwelle) einer durch Stützwerte repräsentierten Funktion zur Kontrolle das Meßvorgangs verwendet wird.

32. Motor oder Lagemelder nach einem od. mehreren der vorhergehenden Ansprüche, dadurch gekennzeichnet, daß
Betrag ( R) und Richtung ( phi o ) der ersten Harmonischen (Grundwelle) einer durch Stützwerte repräsentierten Funktion durch eine Schwerpunktsbestimmung ermittelt werden. ( Fig. 17A, Fig. 17B, Fig. 18 )

33. Motor oder Lagemelder nach einem od. mehreren der vorhergehenden Ansprüche, dadurch gekennzeichnet, daß ein Wert für die Rotorstellung ermittelt wird, und daß dann der so ermittelte Wert anhand einer motortypischen oder motorindividuellen Korrekturtabelle korrigiert wird, um einen korrigierten, besseren Wert für die Rotorstellung zu erhalten.

34. Motor oder Lagemelder nach einem der Ansprüche 1 bis 33 dadurch gekennzeichnet, daß ein Kommutierungsprozessor (100) vorgesehen ist, um Stromsensorsignale (267) sowie Spannungssignale (111, 112 und 113) von Phasen (L1, L2, L3) des Motors oder Lagemelders entgegenzunehmen und hieraus Kommutierungssignale zu errechnen, wobei der Kommutierungsprozessor (100) ausgangsseitig mit einer Endstufeneinheit (26) zum Bestromen der einzelnen Phasen des Motors (10) oder Lagemelders verbunden ist.

35. Motor oder Lagemelder nach Anspruch 34, dadurch gekennzeichnet, daß ein weiterer, dem Kommutierungsprozessor (100) übergeordneter Prozessor (23) vorgesehen ist, und daß der Kommutierungsprozessor (100) über Steuer- und Kommunikationsverbindungen (102-110) mit dem übergeordneten Prozessor (23) verbunden ist.

36. Motor oder Lagemelder nach Anspruch 34 oder 35, dadurch gekennzeichnet, daß der Kommutierungsprozessor (100) folgende Merkmale aufweist:
- eine Kommutierungslogik (1002), um aus extern vorgegebenen und über Leitungen (108-113) eingespeisten Positionsinformationen oder Spulenspannungen des Motors (10) oder Lagemelders den Zeitpunkt, zu dem eine Kommutierung der Motorströme stattfinden soll, zu berechnen;
- mit der Endstufeneinheit (26) verbundene Ausgangsklemmen an der Kommutierungslogik (1002), an denen Kommutierungsschaltsignale (261, 262, 263) abgreifbar sind;
- mit den Spulen des Motors (10) oder Lagemelders verbundene Eingangsklemmen (111-113) zum Anlegen von Spulenspannungen;
- eine an diese Eingangsklemmen (111-113) geschaltete Reihenschaltung eines Abschwächungsgliedes (1008) einer Spannungsvergleichseinheit (1007) und einer Signalverzögerungseinheit (1006), wobei letztere ausgangsseitig mit der Kommutierungslogik (1002) verbunden ist;
- eine Kommutierungssteuereinheit (1005), die auf unterschiedliche externe Signale ansprechbar ist und mit der Kommutierungslogik (1002) in Verbindung steht; und
- eine Stromerfassungseinheit (1009) zum Erfassen, Verstärken und Aufbereiten eines Stromsensorsignales des Motors (10) oder Lagemelders.

37. Einrichtung zum Ansteuern eines Motors mit Motorwicklungen nach einem der Ansprüche 1 bis 36, gekennzeichnet durch die Merkmale:
- Eine Endstufeneinheit (26) mit einer Vielzahl von Schaltelementen und Ausgangsklemmen (261 bis 266), um die Motorwicklungen (L1, L2, L3) des zu steuernden Motors (10) mit Leistung zu versorgen,
- eine an die Endstufeneinheit (26) gekoppelte Steuereinrichtung (100) zum Anlegen von Steuersignalen an die Endstufeneinheit (26), um selektiv die Schaltelemente zu betätigen, wobei über die Schaltelemente selektiv Leistung an den Motor angelegt wird und wobei die Steuereinrichtung (100) zum Empfangen von Meßwertsignalen (108, 109, 110) eines Bestandteiles der an den Motor (10) geführten Leistung vorgesehen ist und die Steuereinrichtung (100) weiter eine Einrichtung (1002) zum Bestimmen von Parametern einer Funktion, die von der veränderlichen Induktanz im Motor abhängt und durch die Folge von Meßwerten festgelegt ist, aufweist, einschließlich einer Einrichtung (23) zum Durchführen einer Vektoraddition oder einer Addition von komplexen Zahlen, wobei die parameterbestimmende Einrichtung (1002) aus den Parametern positionsabhängige und/oder induktanzabhängige elektrische Motorwerte bestimmt.

## Claims

1. A motor or position indicator, particularly a brushless direct current motor comprising a magnetic circuit provided with at least one winding and with a rotor the rotated position of which is continuously ascertained, the rotated position of the rotor being progressively determined by means of computing operations from rotary position dependent or position dependent electrical motor values, characterised in that the motor or position indicator contains means for at least approximately determining the rotary position of the rotor by vectorial computing operations and/or by computing operations for complex-value magnitudes and/or by an integral transformation and/or by a computing method for determining very small square sums or very small absolute amounts and/or by a computing method for determining centre of gravity coordinates.

2. A motor or position indicator according to Claim 1, characterised in that a Fourier transformation or Fourier analysis is used as the integral transformation.

3. A motor or position indicator according to Claim 1 or 2, characterised in that the inductance or counter-inductance of one or more motor windings is used as the position-dependent electric motor value.

4. A motor or position indicator according to Claim 3, characterised in that the position-dependent inductance or counter-inductance of at least one motor winding or position indicator winding is used, of which the magnetic circuit, during the course of a 360° rotation of the rotor, at least temporarily enters a state of saturation or is at least temporarily within the saturation range.

5. A motor or position indicator according to one or more of the preceding Claims, characterised in that the active faces of existing permanent magnets have differing levels of, or unevenly distributed, magnetisation.

6. A motor or position indicator according to one or more of the preceding Claims, characterised in that at least one magnetic flux path of the motor is converted to the unsaturated or less saturated condition by suitable current in at least one inductance.

7. A motor or position indicator according to one or more of the preceding Claims, characterised in that pre-conduction currents are applied to one or more inductances in order to create pre-magnetisation conditions.

8. A motor or position indicator according to one or more of the preceding Claims, characterised in that the current path through at least one inductance of the motor is ascertained at least at one point in time and in that the inductance value of this at least one inductance is ascertained therefrom.

9. A motor or position indicator according to one or more of the preceding Claims, characterised in that the inductance values of at least two inductances are ascertained as functions of the rotor angle of the rotor and are combined to form one averaged-out inductance function and in that the ascertained inductance function is then stored in a storage means in the form of a reference table.

10. A motor or position indicator according to one or more of the preceding Claims, characterised in that interpolated intermediate values either of the measured inductance pattern or of the averaged out inductance pattern are also stored in the storage means.

11. A motor or position indicator according to Claim 10, characterised in that intermediate values which are to be interpolated are ascertained by means of a spline interpolation.

12. A motor or position indicator according to Claim 10, characterised in that intermediate values to be interpolated are ascertained based on a sin-cos series expansion.

13. A motor or position indicator according to one or more of the preceding Claims, characterised in that the rotor position to be found is ascertained by seeking the greatest similarity of functions which are based on the measured current pulses on the one hand and on the values stored in the storage means on the other.

14. A motor or position indicator according to Claim 13, characterised in that the greatest similarity of functions is established by the method of the very small squares or the method of very small absolute amounts.

15. A motor or position indicator according to one or more of the preceding Claims, characterised in that the rotor position is ascertained by multiplying the individual measured current values by estimated or predetermined directional components associated with them and subsequent direction-orientated addition of the products.

16. A motor or position indicator according to Claim 15, characterised in that the predetermined direction components are determined by integral angles which are defined by $360° / n$, in which $n = 1, 2, 3,.....$

17. A motor or position indicator according to Claim 15, characterised in that the directional orientated addition is carried out by vector addition.

18. A motor or position indicator according to Claim 15, characterised in that the directional orientation addition is carried out by the separate addition of the parts of individual and entirely independent components ($x_n$, $y_n$) (Fig. 20).

19. A motor or position indicator according to Claim 15, characterised in that in order to ascertain the rotor position by the directional orientated addition of the products the ascertained directional value (R) is subject to determination of an angle by trigonometric functions, e.g. the inverse tangent function or inverse sine function.

20. A motor or position indicator according to Claim 15, characterised in that the directional components are ascertained by controlled movement of the rotor and are stored in a storage means.

21. A motor or position indicator according to one or more of the preceding Claims, characterised in that current is applied to it according to a discovered deviation of rotor position or rotor speed from a desired position or desired speed, according to a proportional-integral-derivative control algorithm or a condition control algorithm.

22. A motor or position indicator according to one or more of the preceding Claims, characterised in that during run-up of the motor, the cycle duration of the energising pulses is shortened as a function of the number of energising pulses, particularly in accordance with a lineally extending function.

23. A motor or position indicator according to one or more of Claims 1 to 21, characterised in that during run-up of the motor, the cycle duration is shortened as a function of the number of energising pulses, in particular according to a tabulated function.

24. A motor or position indicator according to one or more of the preceding Claims, characterised in that during run-up of the motor, after a specified number of energising pulses, there is a switch-over to a type of commutation which is based on the evaluation of voltages induced in phase windings of the motor.

25. A motor or position indicator according to one or more of the preceding Claims, characterised in that a current signal measured at the motor or position indicator is boosted by an amplifier, particularly one with a high upper limit frequency, the amplified value being fed to an analogue storage circuit.

26. A motor or position indicator according to one or more of the preceding Claims, characterised in that one or more processors are provided for the necessary computations and energising sequences.

27. A motor or position indicator according to one or more of the preceding Claims, characterised in that in order to ascertain the rotor position, a phase determination is used for the first harmonic (fundamental oscillation) of a function, which function is represented by a plurality of sample values, which sample values are obtained from measurements of current, voltage or inductance.

28. A motor or position indicator according to Claim 27, characterised in that the result of phase determination constitutes a direct or indirect measurement for the rotor position which is to be found.

29. A motor or position indicator according to Claim 27, characterised in that for phase determination for the first harmonic, a sum is formed from at least partially multi-component summands, the phase position being calculated from the components of the sum (Fig. 21).

30. A motor or position indicator according to Claim 29, characterised in that trigonometric or arithmetic functions are used to ascertain the phase position, the components of the sum being used to compute trigonometric function values, the arc-tangent function in particular being used as the trigonometric function.

31. A motor or position indicator according to one or more of the preceding Claims, characterised in that the amount (R) of the first harmonic (fundamental oscillation) of a function represented by sample values is used for. monitoring the measuring process.

32. A motor or position indicator according to one or more of the preceding Claims, characterised in that the amount (R) and direction (phi o) of the first harmonic (fundamental oscillation) of a function represented by sample values are ascertained by determining the centre of gravity. (Figs. 17a, 17b, 18).

33. A motor or position indicator according to one or more of the preceding Claims, characterised in that a value is ascertained for the rotor position and in that the value thus ascertained is corrected on the basis of a motor-typical or motor-individual correction table in order to obtain a corrected and better value for the rotor position.

34. A motor or position indicator according to one of Claims 1 to 33, characterised in that a commutating processor (100) is provided in order to receive current sensor signals (267) and voltage signals (111, 112 and 113) from phases (L1, L2, L3) of the motor or position indicator and use them to calculate commutating signals, the commutating processor (100) being connected on the output side to an output stage unit (26) for application of current to the individual phases of the motor (10) or position indicator.

35. A motor or position indicator according to Claim 34, characterised in that a further processor (23) is provided which is superior to the commutating processor (100) and in that the commutating processor (100) is connected to the superior processor (23) via control and communication connections (102-110).

36. A motor or position indicator according to Claim 34 or 35, characterised in that the commutating processor (100) has the following features:
   - a commutating logic (1002) in order to calculate from externally predetermined position data or coil voltages of the motor (10) or position indicator fed in through lines (108-113) the point in time at which commutation of the motor currents is to take place;
   - output terminals on the commutation logic (1002) which are connected to the output stage unit (26) and at which it is possible to access commutation switching signals (261, 262, 263);
   - input terminals (111-113) connected to the coils of the motor (10) or position indicator for the application of coil voltages;
   - connected to these input terminals (111-113), a series circuit of an attenuating member (1008) of a voltage comparison unit (1007) and a signal delay unit (1006), this latter having its output side connected to the commutating logic (1002);
   - a commutating control unit (1005) which is adapted to respond to different external signals and to which the commutating logic (1002) is connected and
   - a current detection unit (1009) for detecting, amplifying and preparing a current sensor signal of the motor (10) or position indicator.

37. An arrangement for actuating a motor with motor windings according to one of Claims 1 to 36, characterised by the features:
   - an output stage unit (26) with a plurality of switching elements and output terminals (261-266) in order to supply power to the motor windings (L1, L2, L3) of the motor (10) which is to be controlled,
   - coupled with the output stage unit (26), a control arrangement (100) for applying control signals to the output stage unit (26) in order to actuate the switching elements selectively, power being selectively applied to the motor via the switching elements, the control arrangement (100) being provided for receiving measured value signals (108, 109, 110) of a constituent part of. the power fed to the motor (10), the control arrangement (100) further comprising a means (1002) for determining parameters of a function which is dependent upon the variable inductance in the motor and established by the sequence of measured values, including an arrangement (23) for carrying out vector addition or an addition of complex numbers, whereby the parameter-determining arrangement (1002) determines position-dependent and/or inductance-dependent electrical motor values from the parameters.

## Revendications

1. Moteur ou capteur de position, en particulier moteur à courant continu sans collecteur, comprenant un circuit magnétique pourvu d'au moins un enroulement, et comprenant un rotor ou un induit dont la position en rotation ou la position est détectée en continu, la position en rotation du rotor ou la position de l'induit étant déterminée en continu au moyen d'opérations de calcul à partir de valeurs électriques du moteur qui dépendent de la position en rotation ou qui dépendent de la position, caractérisé par le fait que le moteur ou le capteur de position contient des dispositifs qui déterminent la position en rotation du rotor ou la position de l'induit, du moins approximativement, au moyen d'opérations de calcul vectoriel et/ou au moyen d'opérations de calcul sur des nombres complexes et/ou au moyen d'une transformation par intégrales et/ou au moyen d'une méthode de calcul pour déterniner des moindres carrés ou des moindres valeurs absolues et/ou au moyen d'un procédé de calcul pour déterminer des coordonnées d'un barycentre.

2. Moteur ou capteur de position selon la revendication 1, caractérisé par le fait que l'on utilise comme transformation par intégrales une transformation de Fourier ou une analyse de Fourier.

3. Moteur ou capteur de position selon la revendication 1 ou 2, caractérisé par le fait que l'on utilise, comme valeur électrique du moteur dépendant de la position, l'inductance ou l'inductance mutuelle d'un ou plusieurs enroulements du moteur.

4. Moteur ou capteur de position selon la revendication 3, caractérisé par le fait que l'on utilise l'inductance ou l'inductance mutuelle dépendant de la position d'au moins un enroulement du moteur ou d'un moins un enroulement du capteur de position dont le circuit magnétique, au cours d'une rotation du rotor de $360°_{é1}$, arrive dans un état de saturation, du moins temporairement, ou se trouve dans la région de la saturation, du moins temporairement.

5. Moteur ou capteur de position selon une ou plusieurs des revendications précédentes, caractérisé par le fait que les surfaces actives d'aimants permanents qui sont présents comportent des magnétisations d'une intensité différente ou qui sont réparties irrégulièrement.

6. Moteur ou capteur de position selon une ou plusieurs des revendications précédentes, caractérisé par le fait qu'au moins un trajet de circulation du flux magnétique du moteur est amené dans un état nun saturé ou moins saturé par une alimentation appropriée d'au moins une inductance.

7. Moteur ou capteur de position selon une ou plusieurs des revendications précédentes, caractérisé par le fait que l'on amène à une ou plusieurs inductances des courants initiaux destinés à engendrer des états de magnétisation initiale.

8. Moteur ou capteur de position selon une ou plusieurs des revendications précédentes, caractérisé par le fait que l'on détermine la valeur du courant à travers au moins une inductance du moteur à un instant au moins, et par le fait que l'on détermine à partir d'elle la valeur de l'inductance de cette inductance au moins.

9. Moteur ou capteur de position selon une ou plusieurs des revendications précédentes, caractérisé par le fait que l'on détermine les valeurs de l'inductance d'au moins deux inductances en fonction de l'angle du rotor, et qu'on les réunit en une fonction d'inductance pondérée, et par le fait que l'on met ensuite en mémoire la fonction d'inductance déterminée dans un organe à mémoire sous la forme d'un tableau de référence.

10. Moteur ou capteur de position selon une ou plusieurs des revendications précédentes, caractérisé par le fait que l'on met aussi en mémoire dans l'organe à mémoire, au choix, des valeurs intermédiaires interpolées de la courbe d'inductance mesurée ou de la courbe d'inductance pondérée.

11. Moteur ou capteur de position selon la revendication 10, caractérisé par le fait que des valeurs intermédiaires à interpoler sont déterminées à l'aide d'une interpolation spline.

12. Moteur ou capteur de position selon la revendication 10, caractérisé par le fait que des valeurs intermédiaires à interpoler sont déterminées au moyen d'un développement en série de cosinus et de sinus.

13. Moteur ou capteur de position selon une ou plusieurs des revendications précédentes, caractérisé par le fait que la position du rotor qu'il s'agit de trouver est déterminée par la recherche de la plus grande similitude de fonctions qui se basent, d'une part, sur les impulsions de courant mesurées, et, d'autre part, sur les valeurs mises en mémoire dans un organe à mémoire.

14. Moteur ou capteur de position selon la revendication 13, caractérisé par le fait que la plus grande similitude des fonctions est établie par la méthode des moindres carrés ou par la méthode des moindres valeurs absolues.

15. Moteur ou capteur de position selon une ou plusieurs des revendications précédentes, caractérisé par le fait que l'on détermine la position du rotor en multipliant les diverses valeurs mesurées du courant par des composantes directionnelles estimées ou prédéterminées qui leur sont associées, puis que l'on effectue l'addition de ces produits pourvus d'une orientation.

16. Moteur ou capteur de position selon la revendication 15, caractérisé par le fait que les composantes prédéterminées de la direction sont déterminées par des angles en nombres entiers qui sont définis par $360°/n$, où $n = 1, 2, 3,...$

17. Moteur ou capteur de position selon la revendication 15, caractérisé par le fait que l'addition des produits orientés est réalisée au moyen d'une somme vectorielle.

18. Moteur ou capteur de position selon la revendication 15, caractérisé par le fait que l'addition des produits orientés est réalisée par l'addition séparée des composantes individuelles $(x_n, y_n)$ indépendantes les unes

des autres (figure 20).

19. Moteur ou capteur de position selon la revendication 15, caractérisé par le fait qu'en vue de la détermination de la position du rotor après l'addition des produits orientés, on soumet la valeur orientée obtenue (R) à une détermination d'angle au moyen de fonctions trigonométriques, et par exemple au moyen de la fonction arc tangente ou de la fonction arc sinus.

20. Moteur ou capteur de position selon la revendication 15, caractérisé par le fait que les composantes de la direction sont déterminées par un déplacement intentionnel du rotor et mises en mémoire dans un organe à mémoire.

21. Moteur ou capteur de position selon une ou plusieurs des revendications précédentes, caractérisé par le fait qu'il est alimenté en courant en fonction d'un écart déterminé de la position du rotor ou de la vitesse du rotor par rapport à une position de consigne ou à une vitesse de consigne, respectivement, selon un algorithme de régulation proportionnelle, intégrale et différentielle ou selon un algorithme de régulation de l'état.

22. Moteur ou capteur de position selon une ou plusieurs des revendications précédentes, caractérisé par le fait que, lors de l'accélération du moteur, la durée de la période des impulsions d'alimentation en courant est raccourcie en fonction du nombre des impulsions d'alimentation en courant, en particulier selon une fonction linéaire.

23. Moteur ou capteur de position selon une ou plusieurs des revendications 1 à 21, caractérisé par le fait que, lors de l'accélération du moteur, la durée de la période est raccourcie en fonction du nombre des impulsions d'alimentation en courant, en particulier selon une fonction sous forme de tableau.

24. Moteur ou capteur de position selon une ou plusieurs des revendications précédentes, caractérisé par le fait que, lors de l'accélération du moteur, et après un nombre déterminé d'impulsions d'alimentation en courant, la commutation a lieu sur un mode de commutation qui est basé sur l'exploitation de tensions induites dans des phases du moteur.

25. Moteur ou capteur de position selon une ou plusieurs des revendications précédentes, caractérisé par le fait qu'un signal de courant mesuré sur le moteur ou sur le capteur de position est amplifié par l'intermédiaire d'un amplificateur, et en particulier d'un amplificateur dont la fréquence limite supérieure est élevée, et que la valeur amplifiée est amenée à un circuit à mémoire analogique.

26. Moteur ou capteur de position selon une ou plusieurs des revendications précédentes, caractérisé par le fait qu'il est prévu un ou plusieurs processeurs pour les calculs et pour les séquences d'alimentation en courant qui sont nécessaires.

27. Moteur ou capteur de position selon une ou plusieurs des revendications précédentes, caractérisé par le fait qu'en vue de la détermination de la position du rotor, on utilise une détermination de la phase pour le premier harmonique (oscillation fondamentale) d'une fonction représentée par une pluralité de valeurs d'appui qui sont obtenues à partir de mesures de courant, de tension ou d'inductance.

28. Moteur ou capteur de position selon la revendication 27, caractérisé par le fait que le résultat de la détermination de la phase constitue une mesure directe ou indirecte de la position du rotor qu'il s'agit de trouver.

29. Moteur ou capteur de position selon la revendication 27, caractérisé par le fait qu'en vue de la détermination de la phase, on forme pour le premier harmonique une somme de termes qui présentent plusieurs composantes, du moins partiellement, et que l'on calcule la position de la phase à partir des composantes de la somme (figure 21).

30. Moteur ou capteur de position selon la revendication 29, caractérisé par le fait qu'en vue de la détermination de la phase, on utilise des fonctions trigonométriques ou arithmétiques, cependant que les composantes de la somme sont utilisées pour calculer les valeurs de fonctions trigonométriques et que, comme fonction trigonométrique, on utilise en particulier la fonction arc tangente.

31. Moteur ou capteur de position selon une ou plusieurs des revendications précédentes, caractérisé par le fait que le module (R) du premier harmonique (onde fondamentale) d'une fonction représentée par des valeurs d'appui est utilisé pour le contrôle du processus de mesure.

32. Moteur ou capteur de position selon une ou plusieurs des revendications précédentes, caractérisé par le fait que le module (R) et l'argument (φo) du premier harmonique (onde fondamentale) d'une fonction représentée par des valeurs d'appui sont obtenus par une détermination de barycentre (figures 17A, figure 17B, figure 18).

33. Moteur ou capteur de position selon une ou plusieurs des revendications précédentes, caractérisé par le fait que l'on détermine une valeur de la position du rotor, et par le fait que l'on corrige ensuite la valeur ainsi déterminée à l'aide d'un tableau de correction caractéristique du moteur ou propre au moteur, afin d'obtenir une valeur corrigée et plus exacte de la position du rotor.

34. Moteur ou capteur de position selon l'une des revendications 1 à 33, caractérisé par le fait qu'il est prévu un processeur de commutation (100) pour recevoir des signaux de capteur de courant (267), ainsi que des signaux de tension (111, 112 et 113) de phases (L1, L2, L3) du moteur ou du capteur de position et pour calculer à partir de ceux-ci des signaux de commutation, le processeur de commutation (100) étant relié du côté de sa sortie à une unité d'étage final (26) pour alimenter en courant les diverses phases du moteur (10) ou du capteur de position.

35. Moteur ou capteur de position selon la revendication 34, caractérisé par le fait qu'il est prévu un autre processeur (23) auquel est subordonné le processeur de commutation (100), et par le fait que le processeur de commutation (100) est relié au processeur (23) auquel il est subordonné par l'intermédiaire de liaisons de commande et de communication (102 à 110).

36. Moteur ou capteur de position selon la revendication 34 ou 35, caractérisé par le fait que le processeur de commutation (100) présente les particularités suivantes :
   - une logique de commutation (1002) qui permet de calculer l'instant auquel une commutation des courants du moteur doit avoir lieu, et ce, à partir d'informations sur la position ou de tensions sur les bobines du moteur (10) ou du capteur de position qui sont prédéterminées extérieurement et qui sont enregistrées par l'intermédiaire de conducteurs (108 à 113) ;
   - des bornes de sortie de la logique de commutation (1002) qui sont reliées à l'unité d'étage final (26) et sur lesquelles des signaux de commutation (261, 262, 263) peuvent être prélevés ;
   - des bornes d'entrée (111 à 113) qui sont reliées aux bobines du moteur (10) ou du capteur de position pour appliquer des tensions aux bobines ;
   - un montage en série qui est branché sur ces bornes d'entrée (111 à 113) et qui comprend un organe d'affaiblissement (1008), une unité de comparaison de la tension (1007) et une unité retardant le signal (1006), cette dernière étant reliée du côté de la sortie à la logique de commutation (1002) ;
   - une unité de commande de la commutation (1005) qui peut répondre à des signaux extérieurs différents et qui est en liaison avec la logique de commutation (1002) ; et
   - une unité de détection du courant (1009) pour détecter, amplifier et préparer un signal de capteur de courant du moteur (10) ou du capteur de position.

37. Dispositif pour exciter un moteur pourvu d'enroulements selon l'une des revendications 1 à 36, caractérisé par les particularités suivantes :
   - une unité d'étage final (26) comprenant une pluralité d'éléments de commutation et de bornes de sortie (261 à 266) pour alimenter en énergie les enroulements (L1, L2, L3) du moteur (10) qu'il s'agit de commander,
   - un dispositif de commande (100) qui est accouplé à l'unité d'étage final (26) en vue d'appliquer des signaux de commande à l'unité d'étage final (26), afin d'actionner sélectivement les éléments de commutation, cependant que de l'énergie est appliquée sélectivement au moteur par l'intermédiaire des éléments de commutation, que le dispositif de commande (100) est prévu pour recevoir des signaux de valeurs mesurées (108, 109, 110) d'une composante de l'énergie amenée au moteur (10), et que le dispositif de commande (100) comporte en outre un dispositif (1002) pour déterminer des paramètres d'une fonction qui dépend de l'inductance variable dans le moteur et qui est déterminée par la séquence des valeurs mesurées, y compris un dispositif (23) pour réaliser une somme vectorielle ou une somme de nombres complexes, le dispositif (1002) qui détermine les paramètres déterminant à partir des paramètres de valeurs électriques du moteur dépendant de la position et/ou dépendant de l'inductance.

EP 0 536 113 B1

Fig. 1

Fig. 2

Fig.3

$$B = \mu \, \mu_0 \, H$$

$$L = n^2 \cdot \frac{B}{H} \cdot \frac{F}{d}$$

$$L = \sim \mu$$

Fig. 4

Fig. 5

Fig. 6

Fig. 7

Fig. 8

# Fig.9

Fig. 10

Fig. 11 A

N    S

S

N    S

N    S

~116

N~117

~118

Fig. 11B

Fig. 11C

Fig. 11D

*Fig. 11E*

Fig. 12

**Fig. 13**

46

Fig. 14

Fig. 15

Fig. 16 A

Fig. 16 B

Fig. 16C

Fig. 17A

Fig. 17 B

Fig. 18

Fig. 19 A

|      | SW1 | SW2 | SW3 |
|------|-----|-----|-----|
| SW4  |     | i 4 | i 5 |
| SW5  | i 1 |     | i 6 |
| SW6  | i 2 | i 3 |     |

Fig. 19 B

# Fig. 19 C

Fig. 19 D

Fig. 20

Fig. 21

| | |
|---|---|
| S40 | Lege  m 1, m 2, m 3 , m 4 , m5 , m 6<br>auf den Stapelspeicher |
| S41 | Setze Speicher SUM_R auf den Wert Null |
| S42 | Setze Speicher SUM_I auf den Wert Null |
| S43 | Hole m 1 vom Stapelspeicher, |
| S44 | addiere m 1      zum Inhalt des Speichers SUM_R |
| S45 | Hole m 2 vom Stapelspeicher , bilde m 2 / 2 |
| S46 | addiere (m 2 / 2 )   zum Inhalt des Speichers SUM_R |
| S47 | addiere (m 2 / 2 )√3 zum Inhalt des Speichers SUM_I |
| S48 | Hole m 3 vom Stapelspeicher , bilde m 3 / 2 |
| S49 | subtrahiere m 3 / 2   vom Inhalt des Speichers SUM_R |
| S50 | addiere (m 3 / 2 )√3  zum Inhalt des Speichers SUM_I |
| S51 | Hole m 4 vom Stapelspeicher |
| S52 | subtrahiere m 4      vom Inhalt des Speichers SUM_R |
| S53 | Hole m 5 vom Stapelspeicher , bilde m 5 / 2 |
| S54 | subtrahiere m 5 / 2   vom Inhalt des Speichers SUM_R |
| S55 | subtrah. (m 5 / 2 )√3 vom Inhalt des Speichers SUM_I |
| S56 | Hole m 6 vom Stapelspeicher , bilde m 6 / 2 |
| S57 | addiere     m 6 / 2   zum Inhalt des Speichers SUM_R |
| S58 | subtrah. (m 6 / 2 )√3 zum Inhalt des Speichers SUM_I |
| S59 | Hole Inhalt d. Speichers SUM_R , quadriere Wert, |
| S60 | merke Ergebnis im Zwischenspeicher |
| S61 | Hole Inhalt d. Speichers SUM_I , quadriere Wert, |
| S62 | addiere Wert aus Zwischenspeicher zu diesem<br>Ergebnis |
| S63 | Ziehe Quadratwurzel aus dieser Summe, |
| S64 | merke Ergebnis in Speicher   BETRAG |
| S65 | Hole Inhalt d. Speichers SUM_I, merke Vorzeichen |
| S66 | Hole Inhalt d. Speichers SUM_R, merke Vorzeichen |
| S67 | Teile Wert SUM_I  durch Wert  SUM_R |
| S68 | Berechne Winkel phi über Arcustangensfunktion<br>                       und Vorzeichen-Werte |

A)

230

m1  m2  m3  m4  m5  m6  m1

B)

$\varphi_0$

R

180°

360°

231

Fig. 21 A

Fig. 22A

Fig. 22 B

*Fig. 22C*

Fig. 23

Flußdiagramm:

| Kollektorloser Gleichstrommotor ohne Drehstellungsgeber | | S1 |
|---|---|---|
| JA       Anlauf als    Schrittmotor?     NEIN | | |

**Left branch (JA):**

- S2 — Erzeuge Schrittimpuls
- S3 — Sende Kommutierungsmuster
- S4 — Führe Motor Energie zu
- S5 — Drehrichtung richtig? JA / NEIN
- S6 — Ändere Drehrichtung
- Bis Umschaltdrehzahl

**Right branch (NEIN):**

- S7 — Erfasse Rotorstellung
- S8 — Sende Kommutierungsmuster
- S9 — Führe Motor Energie zu
- S10
- Bis Umschaltdrehzahl

| Erfasse Nulldurchgang der Gegen-EMK | S11 |
|---|---|
| Sende Kommutierungsmuster | S12 |
| Führe Motor Energie zu | S13 |
| Bis zu Motorstoppbefehl | S14 |
| Motorstopp | S15 |

*Fig. 24*

Fig. 25

Start ～ S20

Lege Zeitnullpunkt fest ～ S21

Erfasse Position ( ohne externen Sensor ) ～ S22

Gib Kommutierungssignal ～ S23

Bestrome Motor ～ S24

Ermittle Istzeit t ～ S25

Berechne Bestromungszeit $\tau$
oder ermittle aus Tabelle ～ S26

Warte $\tau$ Zeiteinheiten ～ S27

Schalte Motorstrom ab ～ S28

bis t > t$_{LIM}$ ～ S29

Gib Kommutierungssignal ～ S30

Bestrome Motor ～ S31

Warte $\tau_o$ Zeiteinheiten ～ S32

Schalte Motorstrom ab ～ S33

bis Stopsignal ～ S34

Programmende ～ S35

*Fig. 26*